# EUROPÄISCHE PATENTSCHRIFT

(11) **EP 4 111 924 B1**
(45) Veröffentlichungstag und Bekanntmachung des Hinweises auf die Patenterteilung: **29.11.2023**
(21) Anmeldenummer: 22181921.2
(22) Anmeldetag: 29.06.2022
(51) Int. Cl.: A47L 5/30, A47L 9/32

(54) **BODENREINIGUNGSMASCHINE**
FLOOR CLEANING MACHINE
MACHINE DE NETTOYAGE DU SOL

(30) Priorität: 29.06.2021 DE 102021116685
(43) Veröffentlichungstag der Anmeldung: 04.01.2023
(73) Patentinhaber: Hako GmbH, 23843 Bad Oldesloe (DE)
(72) Erfinder: Protz, Carsten, 23730 Altenkrempe (DE); Ulrich, Bertram, 23556 Lübeck (DE); Ruiz-Porath, Ricardo, 23843 Bad Oldesloe (DE)
(74) Vertreter: Bird & Bird LLP

(56) Entgegenhaltungen:
- EP-A2- 2 250 957
- WO-A1-2016/022270

## Beschreibung

Die vorliegende Erfindung betrifft eine Bodenreinigungsmaschine, insbesondere eine Scheuersaugmaschine, mit einer Reinigungselementanordnung zum Eingriff mit einer zu reinigenden Bodenfläche.

Derartige Bodenreinigungsmaschinen umfassen eine Basis und eine an einer Unterseite der Basis angeordnete beweglich gehalterte und angetriebene Reinigungselementanordnung, die angetriebene Bürsten aufweist, die mit einer zu reinigenden Bodenfläche eingreifen können. Dabei dienen die Bürsten insbesondere zum Scheuern, einer Bodenfläche. Ferner umfasst die Bodenreinigungsmaschine einen vorzugsweise an der Basis angeordneten Antriebsmotor zum Antreiben der Reinigungselementanordnung und einen an der Basis vorzugsweise beweglich, insbesondere schwenkbar über ein Gelenk, angebrachten Bedienholm zum Führen und Betätigen der Bodenreinigungsmaschine. Dabei kann die Maschine direkt durch einen Benutzer geführt und betätigt werden oder einem Fahrgestell angebracht und von dort betätigt werden.

So ist aus der WO 2020/234904 A1 eine Bodenreinigungsmaschine mit einer Basis und einem sich davon weg erstreckenden Bedienholm bekannt, der über ein Gelenk mit der Basis verbunden ist. Weiterhin sind an einer Basis zwei gegenläufig drehend angetriebene Reinigungselemente vorgesehen, deren Drehachsen gegenüber einer Vertikalen zueinander geneigt sind. Auf diese Weise wird erreicht, dass auf die Basis der Bodenreinigungsmaschine ein Vortrieb ausgeübt wird, wenn die beiden Reinigungselemente rotieren. Dadurch, dass die Reinigungselemente jedoch zueinander geneigt sind, ist die Reinigungswirkung im Bereich der drehend angetriebenen Reinigungselemente nicht gleichmäßig. Vielmehr liegen die Reinigungselemente am äußeren Rand weniger stark an der zu reinigenden Bodenfläche an, sodass dort die Reinigungswirkung geringer ist. Darüber hinaus ist der von den drehend angetriebenen Reinigungselementen dauerhaft erzeugte Vortrieb im Betrieb häufig nachteilhaft. Denn ein Benutzer muss eine erhebliche Kraft aufbringen, um die Bodenreinigungsmaschine abweichend von der Vortriebsrichtung in anderen Richtungen zu bewegen. Das Gelenk zwischen der Basis und dem Bedienholm kann dabei in der Weise ausgebildet sein, dass eine Hülse aus einen elastischen Material mit einer darin eingelassenen Stahlwendel vorgesehen ist.

Allerdings hat sich ein derart ausgebildetes Gelenk als nachteilhaft erwiesen, da damit zwar auch ein Drehmoment parallel zu einer sich senkrecht von der zu reinigenden Bodenfläche erstreckende Hochachse durch den Bedienholm auf die Basis ausgeübt werden kann, es aber nicht möglich ist, auch einen Druck entlang der Längsachse des Bedienholms in Richtung auf den Basis auszuüben. Vielmehr fehlt es bei dem in der Technik beschriebenen Aufbau daran, dass der Bedienholm gegenüber der Basis geführt ist und eine definierte Bewegung ausführen kann. Eine Bodenreinigungsmaschine ist ebenfalls z.B. in EP-A-2250957 offenbart.

Daher ist es die Aufgabe der vorliegenden Erfindung, eine Bodenreinigungsmaschine mit einer Basis und einem schwenkbar mit dieser verbundenen Bedienholm bereitzustellen, wobei das Gelenk einfach aufgebaut ist und zudem erlaubt, in Richtung der Längsachse des Bedienholms wirkende Kräfte auf die Basis zu übertragen.

Erfindungsgemäß wird diese Aufgabe gelöst durch eine Bodenreinigungsmaschine mit einer Basis und einem Bedienholm, wobei die Basis eine Reinigungselementanordnung mit wenigstens einem angetriebenen Reinigungselement aufweist, an dem Eingriffselemente vorgesehen sind, wobei das Reinigungselement ausgebildet ist, mit den daran vorgesehenen Eingriffselementen mit einer zu reinigenden Bodenfläche einzugreifen, sodass freie Enden der Eingriffselemente beim Eingriff mit der Bodenfläche in einer Reinigungsebene angeordnet sind.

Der Bedienholm erstreckt sich entlang einer Längsachse zwischen einem proximalen Ende und einem Betätigungsende ist und über ein Gelenk derart schwenkbar an der Basis angebracht, dass er in beliebige Richtungen gegenüber der Basis verschwenkt werden kann, wobei das Gelenk derart ausgestaltet ist, dass bei einem Verdrehen des Bedienholms um seine Längsachse ein Drehmoment auf die Basis ausgeübt wird, das so ausgerichtet ist, dass dadurch die Basis um eine Hochachse, die senkrecht zu der Reinigungsebene verläuft.

Das Gelenk umfasst einen hülsenförmigen Balg, der sich zwischen einem ersten und einem zweiten Ende erstreckt, dessen erstes Ende mit der Basis verbunden ist und dessen zweites Ende mit dem Bedienholm verbunden ist, ein erstes Stützelement, das im Inneren des Balgs angeordnet und an der Basis davon wegweisend angebracht ist, ein zweites Stützelement, das im Inneren des Balgs angeordnet und an dem proximalen Ende des Bedienholms davon wegweisend angebracht ist, wobei das freie Ende von einem aus dem ersten und dem zweiten Stützelement einen konvex kugelschalenförmig ausgebildeten Vorsprung aufweist und das freie Ende des anderen aus dem ersten und dem zweiten Stützelement eine konkav kugelschalenförmig ausgebildete Aufnahmeaussparung aufweist, und wobei die Aufnahmeaussparung ausgebildet ist, den Vorsprung aufzunehmen.

Die erfindungsgemäßen Bodenreinigungsmaschine weist demnach eine Basis und einen über ein Gelenk mit dieser verbundenen Bedienholm auf, wobei an der Basis eine wenigstens ein angetriebenes Reinigungselements umfassende Reinigungselements Anordnung vorgesehen ist, wobei das Reinigungselement zudem Eingriffselemente aufweist, die dazu vorgesehen sind, mit der zu reinigenden Bodenfläche, über die die Bodenreinigungsmaschine bewegt wird, einzugreifen.

Bei dem wenigstens einen Reinigungselements kann es sich unter anderem um ein Bürstenelement handeln, das sich von einem Reinigungskörper weg erstreckende Borsten aufweist, deren freie Enden wiederum dazu vorgesehen sind mit der zu reinigenden Bodenfläche einzugreifen. Es sind aber auch andere Ausgestaltungen der Reinigungselements denkbar, bei denen die Eingriffselemente beispielsweise als Pads ausgebildet sind, sodass die vorliegende Erfindung nicht auf Reinigungselements in Form von Bürstenelementen beschränkt ist.

Allerdings sind die an dem wenigstens einen Reinigungselements vorgesehenen Eingriffselemente derart aufgebaut, dass sich deren freie Enden, die zum Eingriff mit der zu reinigenden Bodenfläche vorgesehen sind, dann, wenn das Reinigungselements mit einer Bodenfläche eingreift, in einer gemeinsamen Reinigungsebene angeordnet.

Des Weiteren ist bei der erfindungsgemäßen Bodenreinigungsmaschine ein Gelenk vorgesehen, über das die Basis schwenkbar mit dem sich entlang einer Längsachse erstreckenden Bedienholm verbunden ist, sodass der Bedienholm in beliebige Richtungen gegenüber der Basis verschwenkt werden kann. Darüber hinaus ist das Gelenk auch so ausgebildet, dass ein Verdrehen des Bedienholms um seine Längsachse ein Drehmoment auf die Basis ausübt, das senkrecht zu der Reinigungsebene verläuft. Da die Reinigungsebene durch die freien Enden der Eingriffselemente an dem wenigstens einen Reinigungselement definiert ist, wenn die Bodenreinigungsmaschine auf einer zu reinigenden Bodenfläche aufliegt, bedeutet dieses, dass das Gelenk derart ausgestaltet ist, dass ein Verdrehen des Bedienholms mit einer Drehbewegung der Basis auf der zu reinigenden Bodenfläche verbunden ist. Der Benutzer hat also die Möglichkeit, mit Hilfe des Bedienholm die Ausrichtung der Basis auf der zu reinigenden Bodenfläche zu steuern.

Schließlich ist das Gelenk erfindungsgemäß derart ausgestaltet, dass es einen hülsenförmigen Balg aufweist, in dem ein erstes Stützelement und ein zweites Stützelement angeordnet sind, wobei das erste Stützelement an der Basis in einer davon wegweisenden Weise angebracht ist, während das zweite Stützelement an dem proximalen Ende des Bedienholm ebenfalls davon wegweisend angebracht ist. Eines der beiden Stützelemente ist als ein Konvexkugelschalen förmig ausgebildeter Vorsprung vorgesehen, während das andere Stützelement als eine konkav kugelschalenförmige Aufnahmeaussparung ausgebildet ist. Dabei sind der Vorsprung und die Aufnahmeaussparung der Art ausgestaltet, dass der Vorsprung in der Aufnahmeaussparung aufgenommen werden, sodass er für eine Schwenkbewegung geführt ist.

Letzteres bedeutet, dass der Vorsprung und die Aufnahmeaussparung derart bemessen sind, dass dann, wenn der Vorsprung in der Aufnahmeaussparung aufgenommen ist, diese den Vorsprung so führt, dass der Bedienholm gegenüber der Basis entlang einer vorgegebenen Bahn verschwenkt werden muss, damit der Vorsprung in der Aufnahmeaussparung anliegt.

Allerdings sind der Vorsprung und die Aufnahmeaussparung nicht notwendig derart bemessen, dass sie nicht voneinander gelöst werden können.

Dadurch, dass an der Basis und dem Bedienholm der Vorsprung bzw. die Aufnahmeaussparung vorgesehen sind, wird erreicht, dass der Bedienholm bei einer Schwenkbewegung gegenüber der Basis an dieser geführt ist. Dies hat zunächst den Vorteil, dass eine auf den Bedienholm entlang von dessen Längsachse ausgeübte Kraft auch auf die Basis übertragen wird, sodass der Benutzer im Vergleich zum Stand der Technik derartige Kräfte definierter auf die Basis übertragen kann, was eine bessere Steuerbarkeit der Basis bewirkt. Darüber hinaus ist die Führung des Bedienholm an einer durch den Vorsprung oder die Aufnahmeaussparung gebildeten Gegenfläche damit verbunden, dass der Benutzer bei der Bedienung der erfindungsgemäßen Maschine haptisch direkter mit der Basis verbunden ist, sodass er einer Bewegung der Basis über die zu reinigenden Bodenfläche entgegenstehende Widerstände leichter spüren kann und so besser prüfen kann, ob der Reinigungsvorgang in der gewünschten Weise abläuft.

In einer bevorzugten Ausführungsform ist das erste Stützelement mit dem konvex kugelschalenförmig ausgebildeten Vorsprung versehen, während das zweite Stützelement, das an dem Bedienholm vorgesehen ist, die konkav kugelschalenförmig ausgebildete Aufnahmeaussparung aufweist.

Weiterhin kann in einer vorteilhaften Ausführungsform an dem Bedienholm wenigstens ein Riegelelement vorgesehen sein, das relativ zu dem Bedienholm zwischen einer Eingriffsstellung und einer Freigabestellung beweglich ist, wobei ein mit der Basis verbundener Aufnahmeabschnitt vorgesehen ist und wobei das Riegelelement und der Aufnahmeabschnitt derart ausgebildet sind, dass in der Eingriffsstellung das Riegelelement mit dem Aufnahmeabschnitt derart eingreifen kann, dass der Bedienholm gegenüber der Basis verriegelt und an einer Bewegung relativ zu der Basis gehindert ist, und dass in der Freigabestellung des Riegelelements der Bedienholm relativ zu der Basis bewegbar ist. Auf diese Weise wird ermöglicht, dass der Bedienholm in einer vorgegebenen Verriegelungsstellung gegenüber der Basis fixiert werden kann. Dies ermöglicht, die Bodenreinigungsmaschine mit einer Parkstellung auszubilden, aus der der Bedienholm nicht aus Versehen verschwenkt werden kann.

In weiter bevorzugter Weise ist diese Parkstellung derart ausgebildet, dass dann die Längsachse des Bedienholms im Wesentlichen senkrecht zu der Reinigungsebene verläuft, also der Ebene, in der die freien Enden der Eingriffselemente des Reinigungselements angeordnet sind, wenn die Bodenreinigungsmaschine mit einer zu reinigenden Bodenfläche eingreift. Insbesondere wenn in der Parkstellung der Bedienholm senkrecht zu der Eingriffsebene des Reinigungselements angeordnet ist, wird erreicht, dass die Maschine in dieser Stellung nicht Kippen kann. Wenn die Maschine zusätzlich beispielsweise an einer Kante, die zu einem Saugfuß weist, der an der Basis zum Absaugen von Flüssigkeit von der zu reinigenden Bodenfläche angebracht ist, Räder aufweist, kann die Bodenreinigungsmaschine in der Parkstellung durch Schwenken des Bedienholms als Ganzes verkippt werden und dann über den Boden gerollt werden.

In weiter bevorzugter Weise kann der Bedienholm an dem Betätigungsende ein Betätigungselement aufweisen, das mit dem wenigstens einen Riegelelement derart gekoppelt ist, dass durch eine Bewegung des Betätigungselements das Riegelelement von der Eingriffsstellung in die Freigabestellung bewegt wird. Auf diese Weise kann ein Benutzer den Bedienholm in einfacher Weise aus der Park- oder Verriegelungsstellung lösen.

In einer bevorzugten Ausführungsform der vorliegenden Erfindung ist das wenigstens eine Riegelelement quer zur Längsachse des Bedienholms relativ zu diesem zwischen der Eingriffsstellung und der Freigabestellung beweglich.

In dieser bevorzugten Ausführungsform kann das zweite Stützelement in Richtung der Längsachse zwischen einer ersten Stellung und einer zweiten Stellung verschiebbar an dem Bedienholm gehaltert sein, wobei es derart mit dem wenigstens einen Riegelelement eingreift, dass das Riegelelement bei einer Bewegung des zweiten Stützelements aus der ersten Stellung in die zweite Stellung aus der Eingriffsstellung in die Freigabestellung bewegt wird. Das Stützelement bewirkt also, dass das wenigstens eine Riegelelement außer Eingriff mit dem Aufnahmeabschnitt gebracht wird, wenn das Stützelement entlang der Längsachse verschoben wird. Das Stützelement dient damit zusätzlich dazu, die Verriegelung des Bedienholms gegenüber der Basis zu lösen.

In diesem Fall ist es besonders bevorzugt, wenn das Betätigungselement mit dem zweiten Stützelement verbunden ist, sodass durch eine Bewegung des Betätigungselements das zweite Stützelement aus der ersten Stellung in die zweite Stellung bewegt werden kann.

Weiterhin ist es bevorzugt, wenn das zweite Stützelement in der ersten Stellung weiter von dem Betätigungsende des Bedienholms entfernt ist als in der zweiten Stellung.

Ferner kann das zweite Stützelement entlang der Längsachse des Bedienholms in einer Richtung weg von dem Betätigungsende in die erste Stellung vorgespannt, während erste Vorspannmittel vorgesehen sind, die das erste und das zweite Ende des Balgs voneinander weg vorspannen. Bei diesem Aufbau wird erreicht, dass das zweite Stützelement zunächst entgegen der Wirkung entsprechender Vorspannmittel in eine zweite Stellung verbracht werden muss, um das Riegelelement in seine Freigabestellung zu bringen, die weiter entfernt entfernt von dem Vorsprung ist, wobei hierzu auch noch eine Kraft aufgewandt werden muss. Wenn das Riegelelement jedoch gegenüber dem Aufnahmeabschnitt gelöst ist, bewirken die ersten Vorspannmittel, dass sich der Bedienholm und damit das zweite Stützelement von der Basis entfernen, sodass auch das Riegelelement nicht mehr dem Aufnahmeabschnitt gegenüberliegt. Dadurch wird es ermöglicht, dass das zweite Stützelement aufgrund von dessen Vorspannung hin zu der ersten Stellung wieder in Richtung des Vorsprungs gedrückt wird und mit diesem in der Weise zur Anlage kommt, dass die Aufnahmeaussparung den Vorsprung aufnimmt.

In einer bevorzugten Ausführungsform ist es auch möglich, dass der vorzugsweise an der Basis vorgesehene Vorsprung derart in der Aufnahmeaussparung aufgenommen ist, dass das zweite Stützelement und damit der Bedienholm an einer Bewegung, insbesondere in Richtung der Längsachse des Bedienholms, weg von dem ersten Stützelement und damit der Basis gehindert ist. Dadurch ist eine unmittelbare Kopplung von Bedienholm und Basis gegeben.

In weiter bevorzugter Weise kann an dem Bedienholm ein Riegelelement vorgesehen sein, das entlang der Längsachse des Bedienholms zwischen einer Eingriffsstellung und einer Freigabestellung beweglich ist, wobei der Aufnahmeabschnitt als eine von der Basis wegweisende Aussparung in dem Vorsprung vorgesehen ist, die ausgebildet, das Riegelelement aufzunehmen, wenn dieses sich in der Eingriffsstellung befindet, wobei das Riegelelement in der Eingriffsstellung den Bedienholm gegenüber der Basis verriegelt und an einer Bewegung relativ zu der Basis hindert. Eine solche Ausführungsform hat den Vorteil, dass das Riegelelement von einem sich am Betätigungsende des Bedienholm des vorgesehenen Griffelement aus leicht durch eine sich entlang der Längsachse erstreckende Verbindung bewegt werden kann. Eine Betätigung von einem Griffelement aus kann also leicht verwirklicht werden.

In diesem Zusammenhang ist es besonders bevorzugt, wenn ein im Bereich des Griffelements vorgesehenes Betätigungselement derart mit dem Riegelelement gekoppelt ist, dass eine Betätigung des Betätigungselements eine Bewegung des Riegelelement entlang der Längsachse hin zu dem Betätigungsende bewirkt.

Wenn schließlich zweite Vorspannmittel vorgesehen sind, die den Bedienholm mit einer Kraft beaufschlagen, die den Bedienholm in eine Stellung treibt, in der die Längsachse senkrecht zu der Reinigungsebene verläuft, wird erreicht, dass ein Benutzer gerade bei stark geneigtem Bedienholm kein großen Kräfte auf diesen ausüben muss, um ihn in dieser Stellung zu halten.

Die vorliegende Erfindung wird im Folgenden anhand einer lediglich bevorzugte Ausführungsbeispiele zeigenden Zeichnung näher erläutert, wobei
- Figur 1: eine perspektivische Ansicht eines ersten Ausführungsbeispiels einer Bodenreinigungsmaschine gemäß der vorliegenden Erfindung zeigt,
- Figur 2: eine Schnittansicht der Basis der Bodenreinigungsmaschine aus Figur 1 zeigt,
- Figur 3: eine perspektivische Ansicht der Bodenreinigungsmaschine aus Figur 1 von unten zeigt,
- Figur 4: eine Schnittansicht des Abschnitts des Bedienholms der Bodenreinigungsmaschine aus Figur 1 zeigt,
- Figur 5: eine Schnittansicht des Bereichs des Gelenks zwischen der Basis und dem Bedienholm der Bodenreinigungsmaschine aus Figur 1 zeigt, wobei die Riegelelemente in der Eingriffsstellung sind und mit den Aufnahmeabschnitten eingreifen,
- Figur 6: eine Schnittansicht des Bereichs des Gelenks zwischen der Basis und dem Bedienholm der Bodenreinigungsmaschine aus Figur 1 zeigt, wobei die Riegelelemente in der Freigabestellung sind,
- Figur 7: eine Schnittansicht des Bereichs des Gelenks zwischen der Basis und dem Bedienholm der Bodenreinigungsmaschine aus Figur 1 zeigt, wobei die Riegelelemente in der Eingriffsstellung und beabstandet von den Aufnahmeabschnitten sind,
- Figur 8: eine Schnittansicht des Bereichs des Gelenks zwischen der Basis und dem Bedienholm der Bodenreinigungsmaschine aus Figur 1 zeigt, wobei der Bedienholm gegenüber der Basis verschwenkt ist,
- Figur 9: eine Schnittansicht des Abschnitts des Bedienholms eines zweiten Ausführungsbeispiels einer Bodenreinigungsmaschine zeigt, die ähnlich der aus Figur 1 ist,
- Figur 10: eine Schnittansicht des Abschnitts des Gelenks des Bedienholms der Bodenreinigungsmaschine aus Figur 9 zeigt, wobei das Riegelelement in einer Eingriffsstellung in dem Aufnahmeabschnitt aufgenommen ist, und
- Figur 11: eine Schnittansicht des Abschnitts des Gelenks des Bedienholms der Bodenreinigungsmaschine aus Figur 9 zeigt, wobei das Riegelelement in einer Freigabestellung von dem Aufnahmeabschnitt gelöst ist und der Bedienholm im größtmöglichen Umfang gegenüber der Basis verschwenkt ist.

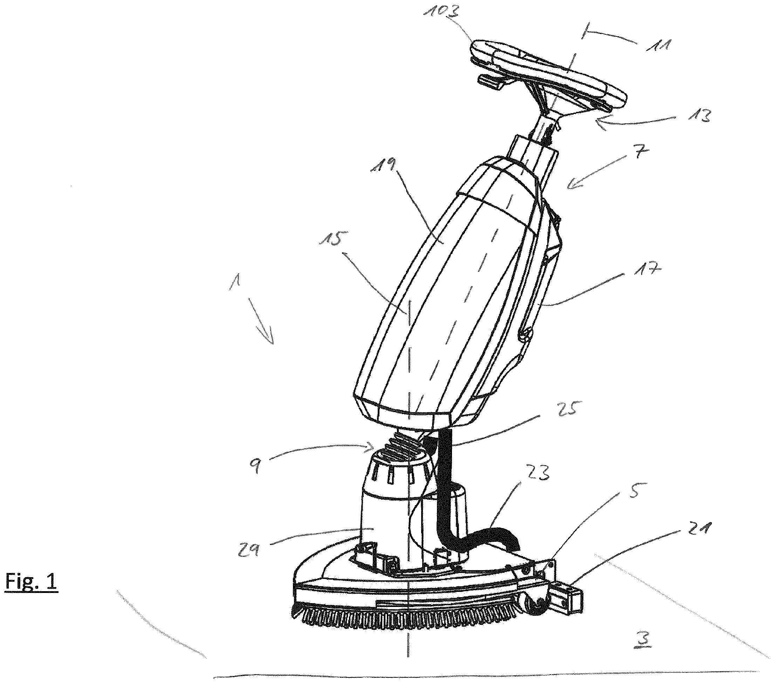

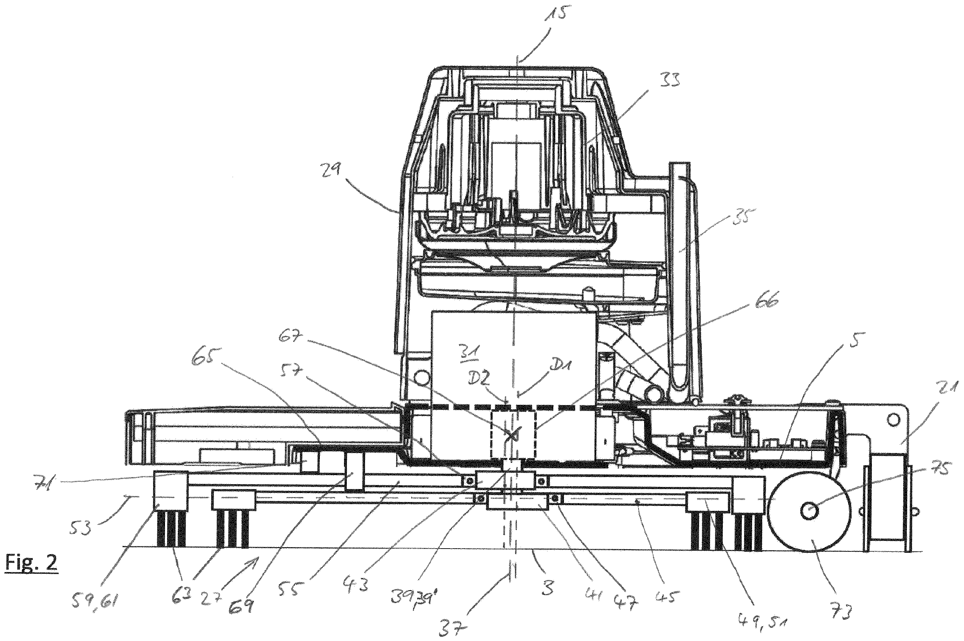

In Figur 1 ist ein erstes Ausführungsbeispiel einer Bodenreinigungsmaschine 1 gemäß der vorliegenden Erfindung dargestellt, die hier als eine handgeführte Scheuersaugmaschine ausgebildet und mit einer Reinigungselementanordnung versehen ist, mit der Reinigungsflüssigkeit auf die Bodenfläche 3 (siehe Figur 1 und 2) aufgebracht werden kann und die Reinigungselemente zum Eingriff mit der zu reinigenden Bodenfläche 3 aufweist. Ferner ist die Scheuersaugmaschine mit einem Saugfuß versehen, mit dem Scheuerrückstände einschließlich der Reinigungsflüssigkeit wieder abgesaugt werden können. Die hier beschriebenen Ausführungsbeispiele von Bodenreinigungsmaschinen 1 weisen einen nachfolgend noch im Detail beschriebenen, an einer Basis 5 der Bodenreinigungsmaschine 1 angebrachten Bedienholm 7 auf, wobei der Bedienholm 7 schwenkbar an der Basis 5 angebracht ist.

Das hier beschriebene erste Ausführungsbeispiel einer erfindungsgemäßen Bodenreinigungsmaschine 1 umfasst wie bereits erwähnt eine Basis 5, an der über ein Gelenk 9, das nachfolgend noch genauer beschrieben wird, ein Bedienholm 7 angebracht ist. Der Bedienholm 7 erstreckt sich dabei von dem Gelenk 9, über das er schwenkbar mit der Basis 5 verbunden ist, entlang einer Längsachse 11 zu einem Betätigungsende 13, wobei das proximale Ende des Bedienholms 7 benachbart zu dem Gelenk 9 vorgesehen ist. Das Gelenk 9 ist dabei derart ausgestaltet, dass dann, wenn der Bedienholm 7 um die Längsachse 11 verschwenkt oder gedreht wird, ein Drehmoment auf die Basis 5 ausgeübt wird, sodass diese um eine Hochachse 15 gegenüber der Bodenfläche 3 verschwenkt wird, wobei die Hochachse 15 senkrecht zu der Bodenfläche 3 verläuft. Das Gelenk 9 ermöglicht also aufgrund seines Aufbaus, dass ein Benutzer, der den Bedienholm 7 an dessen Betätigungsende 13 ergreift, die Basis 5 lenken kann.

An dem Bedienholm 7 sind ein Reinigungsflüssigkeitsbehälter 17 sowie ein Schmutzwassertank 19 lösbar angebracht, die in einer noch beschriebenen Weise mit der Basis 5 sowie einem schwenkbar an der Basis 5 gehalterten Saugfuß 21 über Leitungen 23, 25 verbunden sind. Dabei kann der Saugfuß 21 zwischen der in den Figuren gezeigten Stellung, in der er der zu reinigenden Bodenfläche 3 gegenüberliegt, und einer hochgeklappten Stellung, in der er von der Bodenfläche 3 beabstandet ist, verschwenkt werden.

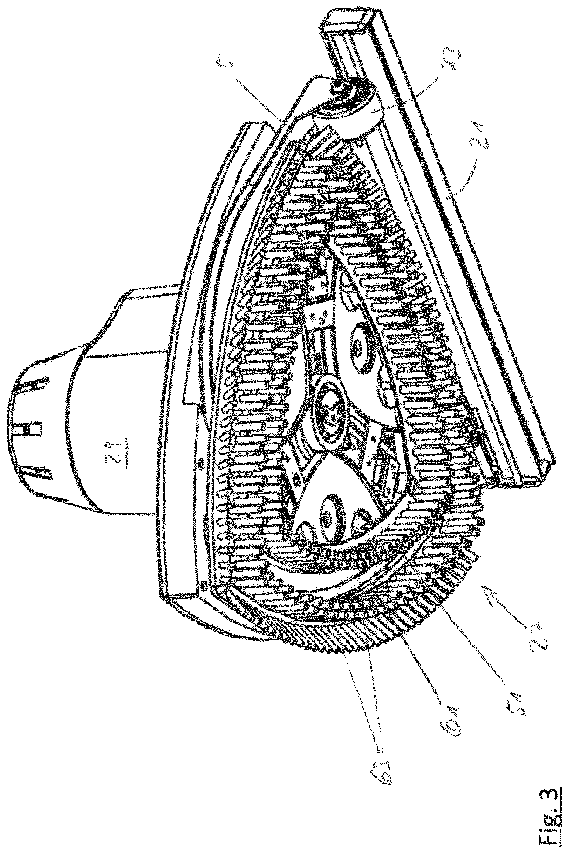

Schließlich ist auf der zu der zu reinigenden Bodenfläche 3 weisenden Unterseite der Basis 5 eine Reinigungselementanordnung 27 vorgesehen (siehe Figuren 2 und 3), die ausgestaltet ist, mit der zu reinigenden Bodenfläche 3 einzugreifen, wobei die Reinigungselementanordnung 27 durch einen in einem Gehäuse 29 an der Basis angeordneten Antriebsmotor 31 angetrieben ist. Bei dem Antriebsmotor 31 kann es sich beispielsweise um einen Elektromotor handeln, der von einer in den Figuren nicht dargestellten und an der Basis 5 oder dem Bedienholm 7 angebrachten Batterieeinheit versorgt wird. Die vorliegende Erfindung ist aber nicht auf Elektromotoren beschränkt, und es ist grundsätzlich auch möglich, dass der Antriebsmotor 31 mit Druckluft angetrieben wird. Dies kann dann der Fall sein, wenn die Bodenreinigungsmaschine 1 als Zusatzgerät an einer selbstfahrenden Maschine verwendet wird.

In dem Gehäuse 29 der Basis 5 ist ferner eine Saugturbine 33 angeordnet, deren Saugseite über die Leitung 25 mit dem oberen Ende des Schmutzwassertanks 19 verbunden ist. Der Schmutzwassertank 19 wiederum ist über die Leitung 23 mit dem Saugfuß 21 verbunden. Die Saugturbine 33 bildet eine Saugeinrichtung, mit deren Hilfe ein Saugluftstrom von dem Saugfuß 21 in den Schmutzwassertank 19 erzeugt wird, sodass Reinigungsflüssigkeit von der zu reinigenden Bodenfläche 3 abgesaugt werden kann. Weiter sind in der Basis 5 zusätzliche Leitungen 35 vorgesehen, über die Reinigungsflüssigkeit aus dem Reinigungsflüssigkeitsbehälter 17 durch die Basis 5 hindurch in den Bereich der Reinigungselementanordnung 27 und dabei auf die zu reinigende Bodenfläche 3 aufgebracht werden kann.

Wie insbesondere der Figur 2 zu entnehmen ist, weist der Antriebsmotor 31 eine sich entlang einer Abtriebsachse 37 erstreckende Abtriebswelle 39 auf, die durch den Antriebsmotor 31 drehend angetrieben ist. An der Abtriebswelle 39 sind in axialer Richtung der Abtriebsachse 37 gesehen hintereinander eine erste Exzenterscheibe 41 sowie eine zweite Exzenterscheibe 43 drehfest angebracht. An dem Außenumfang der ersten Exzenterscheibe 41 ist ein erstes Aufnahmeelement 45 über ein erstes Lager 47 drehbar befestigt, wobei das erste Aufnahmeelement 45 mit dem inneren Reinigungskörper 49 eines inneren Reinigungselements 51 fest verbunden ist. Das erste Aufnahmeelement 45 ist dabei gegenüber der ersten Exzenterscheibe 41 um eine erste Drehachse D1 drehbar, die parallel zu der Abtriebsachse 37 verläuft. Dabei weist der innere Reinigungskörper 49 des inneren Reinigungselements 51 eine erste Aufnahmeöffnung auf, in der das erste Aufnahmeelement 45 aufgenommen ist. Außerdem erstreckt sich der innere Reinigungskörper 49 in einer Reinigungskörperebene 53, die im Betrieb der Bodenreinigungsmaschine 1, wenn diese auf einer zu reinigenden Bodenfläche 3 angeordnet ist, im Wesentlichen parallel zu der Ebene der zu reinigenden Bodenfläche 3 verläuft.

In ähnlicher Weise ist an dem Außenumfang der zweiten Exzenterscheibe 43 ein zweites Aufnahmeelement 55 über ein zweites Lager 57 drehbar angebracht, wobei das zweite Aufnahmeelement 55 fest mit einem äußeren Reinigungskörper 59 eines äußeren Reinigungselements 61 verbunden ist. Dabei ist das zweite Aufnahmeelement 55 gegenüber der zweiten Exzenterscheibe 43 um eine zweite Drehachse D2 drehbar, die parallel zu der Abtriebsachse 37 und der ersten Drehachse D1 verläuft. Dabei weist der äußere Reinigungskörper 59 eine zweite Aufnahmeöffnung auf, in der zum einen das zweite Aufnahmeelement 55 und zum anderen der innere Reinigungskörper 49 des inneren Reinigungselements 51 aufgenommen sind. Daher umgibt der äußeren Reinigungskörper 59 den inneren Reinigungskörper 49, und das äußere Reinigungselement 61 ist äußerlich um das innere Reinigungselement 51 angeordnet. Außerdem erstreckt sich auch der äußere Reinigungskörper 59 und damit das äußere Reinigungselements 61 in der Reinigungskörperebene 53.

Sowohl der innere Reinigungskörper 49 als auch der äußere Reinigungskörper 59 sind in der Reinigungskörperebene 53 angeordnet, d. h. wenigstens Teile sowohl von dem inneren Reinigungskörper 49 als auch von dem äußeren Reinigungskörper 59 schneiden im Querschnitt gesehen die Reinigungskörperebene 53. Ferner ist sowohl Figur 2 als auch Figur 3 zu entnehmen, dass das innere Reinigungselement 51 und das äußere Reinigungselement 61 Eingriffselemente 63 aufweisen, die an dem jeweiligen Reinigungskörper 49, 59 befestigt sind und zu der Seite der Reinigungskörperebene 53 weisen, die zu der zu reinigenden Bodenfläche 3 weist. Die Eingriffselemente 63 sind dazu vorgesehen, mit der zu reinigenden Bodenfläche 3 einzugreifen. In dem hier beschriebenen Ausführungsbeispiel sind die Reinigungselemente 63 als Borsten ausgebildet. Es ist aber auch denkbar, dass diese durch Pads oder dergleichen gebildet sind. Allgemein sind die Eingriffselemente 63 der Reinigungselemente 51, 61 so ausgebildet, dass deren freie Enden mit der zu reinigenden Bodenfläche 3 eingreifen können, wobei dann die freien Enden der Eingriffselemente 63 beim Eingriff mit der Bodenfläche 3 in einer Reinigungsebene angeordnet sind, die mit der Ebene der zu reinigenden Bodenfläche 3 zusammenfällt.

Im hier beschriebenen Ausführungsbeispiel sind die erste und die zweite Exzenterscheibe 41, 43 ferner derart angeordnet, dass die erste und die zweite Drehachse D1, D2 und die Abtriebsachse 37 immer in einer gemeinsamen Ebene verlaufen, wenn die Abtriebswelle 39 rotiert. Damit ist verbunden, dass die Exzenterscheiben 41, 43 um 180° versetzt zueinander auf der Abtriebswelle 39 befestigt sind.

Wie weiter der Figur 2 zu entnehmen ist, weist die Abtriebswelle 39 einen Abtriebswellenabschnitt 39' auf, der sich in die erste und die zweite Aufnahmeöffnung des inneren Reinigungskörpers 49 und des äußeren Reinigungskörpers 59 erstreckt und der sich ferner auch über den Bereich der Abtriebswelle 39 erstreckt, auf den die Projektion des inneren oder des äußeren Reinigungskörpers 49, 59 auf die Abtriebswelle 39 fällt. In diesem Bereich sind auch das erste Exzenterelement 41 und das zweite Exzenterelement 43 in axialer Richtung der Abtriebswelle 39 gesehen hintereinander angeordnet. Schließlich sind die Reinigungskörper 49, 59 so aufgebaut und an der Abtriebswelle 39 über die Exzenterscheiben 41, 43 und die Aufnahmeelemente 45, 55 so befestigt, dass die Projektion des inneren Reinigungskörpers 49 auf die Abtriebswelle 39 zumindest teilweise mit der Projektion des äußeren Reinigungskörpers 59 auf die Abtriebswelle 39 überlappt, sodass die axiale Erstreckung des Aufbaus aus den beiden Reinigungskörpern 49, 59 entlang der Abtriebsachse 37 so kurz wie möglich ist.

Bei dem hier beschriebenen Ausführungsbeispiel sind das innere Reinigungselement 51 und das äußere Reinigungselement 61 ferner derart ausgestaltet, dass ihre Massen gleich groß sind, und das innere Reinigungselement 51 und das äußere Reinigungselement 61 weisen Eingriffsflächen auf, die von den mit ihnen verbundenen Reinigungselementen 63 gebildet werden und mit denen sie mit der zu reinigenden Bodenfläche 3 eingreifen, wobei diese Eingriffsflächen der beiden Reinigungselemente 51, 61 gleich groß sind.

Außerdem ist insbesondere Figur 3 zu entnehmen, dass das äußere Reinigungselement 51 in der Reinigungskörperebene 53 gesehen eine dreieckige äußere Kontur aufweist, wobei die Schenkel der dreieckigen äußeren Kontur konvex ausgebildet sind. Ferner weist die zweite Aufnahmeöffnung in der Reinigungskörperebene 53 eine dreieckige innere Kontur auf, und das innere Reinigungselement 51 weist in der Reinigungskörperebene 53 ebenfalls eine dreieckige äußere Kontur auf. Die vorliegende Erfindung ist aber nicht auf die hier beschriebene Form der Reinigungselemente 51, 61 beschränkt. Vielmehr ist es auch denkbar, dass die Reinigungselemente in Draufsicht als Dreiecke mit geraden Schenkeln, als Rechtecke oder als Trapeze ausgebildet sind, wobei die Ausrichtung einer ggf. vorhandenen Spitze relativ zur bevorzugten Bewegungsrichtung der Bodenreinigungsmaschine unterschiedlich sein, d.h. die Spitze weist in Bewegungsrichtung oder in eine entgegengesetzte Richtung.

Weiterhin ist in Figur 2 gezeigt, dass an der Basis 5 ein Antriebsmotorhalteelement 65 vorgesehen ist, an dem wiederum der Antriebsmotor 31 fest angebracht ist. Das Antriebsmotorhalteelement 65 ist gegenüber der Basis 5 über elastische Elemente 66 schwenkbar gehaltert, wobei das Antriebsmotorhalteelement 65 insbesondere um eine Schwenkachse 67 relativ zu der Basis 5 schwenken kann, die parallel zu der Reinigungskörperebene 53 verläuft. Außerdem verläuft die Schwenkachse 67 im Wesentlichen senkrecht zu einer Richtung, in der die Bodenreinigungsmaschine 1 im Normalbetrieb vorwärts bewegt wird. Dadurch, dass das Antriebsmotorhalteelement 65 schwenkbar an der Basis 5 gehaltert ist und fest mit dem Antriebsmotor 31 und damit mit der Reinigungselementanordnung 27 verbunden ist, können die Reinigungselemente 51, 61 gegenüber der Basis 5 schwenken, und die Ausrichtung der Reinigungselemente 51, 61 kann sich selbsttätig an den Verlauf der Bodenfläche 3 anpassen, ohne dass es dafür erforderlich ist, dass der Benutzer die Basis 5 entsprechend verschwenken muss.

Wie weiterhin Figur 2 zu entnehmen ist, sind erste elastische Elemente 69 vorgesehen, die einerseits über das erste Aufnahmeelement 45 fest mit dem inneren Reinigungskörper 49 und andererseits fest mit dem Antriebsmotorhalteelement 65 verbunden sind. In gleicher Weise sind zweite elastische Elemente 71 vorgesehen, die zum einen über das zweite Aufnahmeelement 55 fest mit dem äußeren Reinigungskörper 59 und zum anderen fest mit dem Antriebskörperhalteelement 65 verbunden sind. Die elastischen Elemente 69, 71 sind dabei derart ausgestaltet, dass sie, obwohl sie fest mit dem Antriebsmotorhalteelement 65 und dem jeweiligen Reinigungskörper 49, 59 verbunden sind, eine begrenzte Bewegung der Reinigungskörper 49, 59 parallel zu der Reinigungskörperebene 53 erlauben.

Wenn der Antriebsmotor 31 eingeschaltet wird und die Abtriebswelle 39 rotiert, werden der innere Reinigungskörper 49 und der äußere Reinigungskörper 59 und damit das innere Reinigungselement 51 und das äußere Reinigungselement 61 in eine exzentrische Bewegung um die Abtriebsachse 37 versetzt. Eine solche exzentrische Bewegung zeichnet sich dadurch aus, dass sich senkrecht zu der Reinigungskörperebene 53 gesehen jeder Punkt des Reinigungselements 51 und des zweiten Reinigungselements 61 im Wesentlichen kreisförmig um eine Achse bewegt, die parallel zu der Abtriebsachse 37 verläuft, wobei aber die Achsen für senkrecht zu der Reinigungskörperebene 53 gesehen nicht zusammenfallende Punkte voneinander verschieden sind. Bei jedem Reinigungselement 51, 61 ist es bei einer solchen exzentrischen Bewegung dann so, dass sich zu jedem Zeitpunkt senkrecht zu der Reinigungskörperebene 53 gesehen alle Punkte des Reinigungselements 51, 61 in eine einzige Bewegungsrichtung bewegen.

Aufgrund der Anordnung der ersten und zweiten Drehachse D1, D2 in einer gemeinsamen Ebene zusammen mit der Abtriebsachse 37 bzw. dem Versatz der Exzenterscheiben 41, 43 um 180° sind die exzentrischen Bewegungen des inneren Reinigungselements 51 und des äußeren Reinigungselements 61 derart gegeneinander phasenverschoben, dass senkrecht zu der Reinigungskörperebene 53 gesehen die Bewegungsrichtung der Punkte des inneren Reinigungselements 51 zu jedem Zeitpunkt entgegengesetzt zu der Bewegungsrichtung der Punkte des äußeren Reinigungselements 61 ist. Die exzentrischen Bewegungen sind damit 180° gegeneinander phasenverschoben.

Da die Reinigungskörper 49, 51 über die elastischen Elemente 69, 71 mit dem Antriebsmotorhalteelement 65 verbunden sind, sodass sie nur eine Bewegung in einem geringen Umfang relativ zu dem Antriebsmotorhalteelement 65 ausführen können, wird die Bewegung der Reinigungskörper 49, 59 auf die zuvor beschriebene exzentrische Bewegung beschränkt, und die Reinigungskörper 49, 51 können nicht auch um ihre jeweiligen Drehachsen D1, D2 relativ zu der Basis 5 rotieren.

Zudem sind die Massen und die Eingriffsflächen der Reinigungselemente 51, 61 gleich groß, was zusammen mit der immer entgegengesetzten Bewegung der Reinigungselemente 41, 51 insgesamt dazu führt, dass sich die aufgrund der Bewegung der Reinigungselemente 51, 61 erzeugten Kräfte und Momente aufheben und auf die Basis 5 keine resultierenden Kräfte wirken.

Schließlich ist den Figuren zu entnehmen, dass an der Basis 5 Führungsräder 73 gehaltert sind, die um einen gemeinsame Räderachse 75 drehbar sind. Diese Räderachse 75 verläuft parallel zu der Schwenkachse 67 und damit ebenfalls parallel zu der Bürstenebene 53 und senkrecht zu der Richtung, in der die Bodenreinigungsmaschine 1 im Normalbetrieb über die zu reinigenden Bodenfläche 3 bewegt wird. Wenn den Führungsräder 73 auf der zu reinigenden Bodenfläche 3 auflegen, kann die Bodenreinigungsmaschine 1 bequem entlang der durch die Räderachse 75 definierten Richtung bewegt werden, ohne dass ein Benutzer große Kräfte auf den Bedienholm 7 ausüben muss. Die Führungsräder 73 können dabei in einer solche Höhe an der Basis 5 angebracht sein, dass sie nur dann auf der zu reinigenden Bodenfläche 3 aufliegen, wenn mittels des Bedienholms 7 eine entsprechende Kraft auf die Basis 5 ausgeübt wird, aufgrund derer die Basis 5 gegenüber des Antriebsmotorhalteelements 65 um die Schwenkachse 67 verschwenkt wird. Bei einer solchen Anordnung der Führungsräder 73 wird durch den Benutzer bestimmt, ob die Maschine eine geradlinige Bewegung ausführen oder ohne Kontakt der Führungsräder 73 mit der Bodenfläche 3 bewegt werden soll.

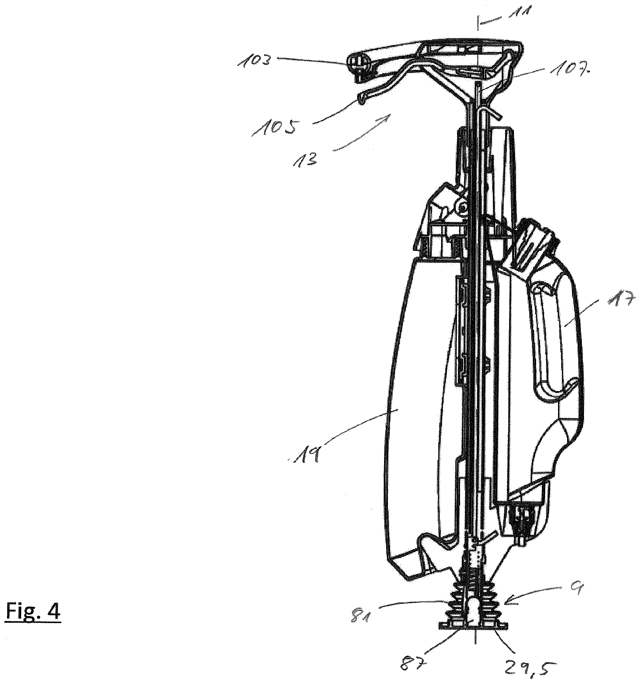

Nachfolgend wird nun unter Bezugnahme auf die Figuren 4 bis 8 der Aufbau des Gelenks 9 des ersten Ausführungsbeispiels beschrieben, wobei das Gelenk 9 die Basis 5 mit dem Bedienholm 7 koppelt, sodass der Bedienholm 7 gegenüber der Basis 5 verschwenkt werden kann, gleichzeitig aber eine Steuerung der Basis 5 möglich ist, d.h. ein Drehmoment um die Hochachse 15 auf die Basis 5 mittels des Bedienholms 7 ausgeübt werden kann.

In dem hier beschriebenen ersten Ausführungsbeispiel umfasst das Gelenk 9 einen hülsenförmigen Balg 81, der ein erstes Ende 83 und ein zweites Ende 85 aufweist, wobei das erste Ende 83 mit der Basis 5 und in dem hier beschriebenen Ausführungsbeispiel mit dem an der Basis 5 vorgesehenen Gehäuse 29 befestigt ist, während das zweite Ende 85 an dem proximalen Ende des Bedienholms 7 befestigt ist. Der hülsenförmige Balg 81 umgibt ein erstes Stützelement 87, das an der Basis 5 bzw. dem daran angebrachten Gehäuse 29 befestigt ist und dessen freies Ende einen konvex kugelschalenförmigen Vorsprung 89 aufweist. Dabei weist das erste Stützelement 87 von der Basis 5 weg. Weiterhin ist im Inneren des Balg 81 ein zweites Stützelement 91 zumindest abschnittsweise aufgenommen, das im vorliegenden ersten Ausführungsbeispiel an dem Bedienholm 7 verschiebbar angebracht ist und an seinem freien Ende eine konkav kugelschalenförmig ausgebildete Aufnahmeaussparung 93 aufweist. Das zweite Stützelement 91 weist dabei von dem Betätigungsende 13 des Bedienholms 7 weg. Die Aufnahmeaussparung 93 ist dabei derart angepasst, dass darin der konvex kugelschalenförmig ausgebildete Vorsprung 89 des ersten Stützelements 87 aufgenommen werden kann. Insbesondere sind der Vorsprung 89 und die Aufnahmeaussparung 93 in dem hier beschriebenen bevorzugten ersten Ausführungsbeispiel derart ausgebildet, dass der Vorsprung 89 flächig an der Aufnahmeaussparung 93 anliegt. Es sind aber auch andere Ausgestaltungen denkbar. Weiterhin ist es auch möglich, dass ein konvexer Vorsprung an dem zweiten Stützelement vorgesehen ist, während eine konkave Aufnahmeaussparung an dem ersten Stützelement ausgebildet ist.

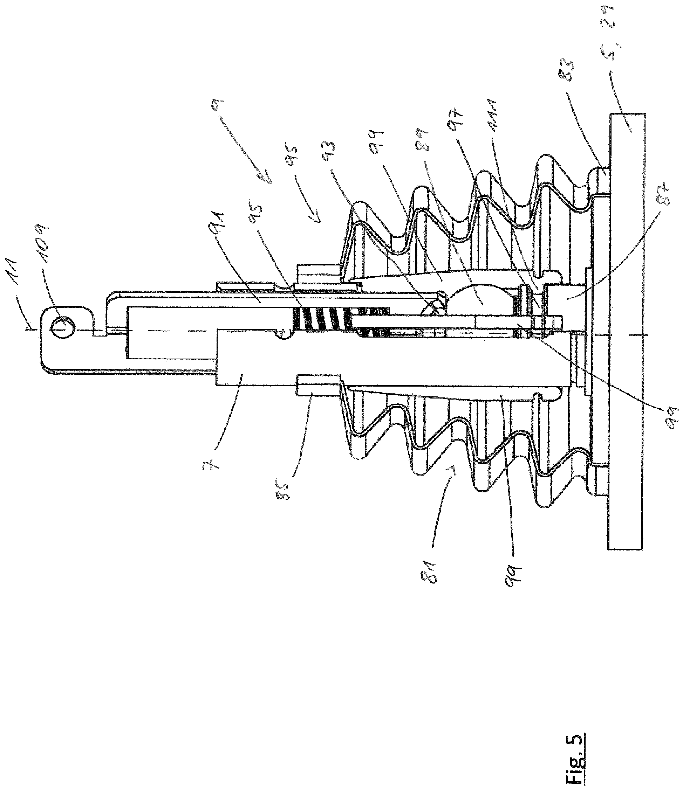

Wie weiter in Figur 5 zu erkennen ist, in der lediglich das proximale Ende des Bedienholms 7 gezeigt ist, ist das zweite Stützelement 91 durch eine Feder 95, deren eines Ende sich an dem Bedienholm 7 abstützt, während sich deren anderes Ende an dem zweiten Stützelement 91 abstützt, in eine Richtung vorgespannt, die weg von dem Betätigungsende 13 und damit hin zu dem ersten Stützelement 87 weist. Wie weiter in Figur 5 zu erkennen ist, weist das erste Stützelement 87 und damit die Basis 5 bzw. das Gehäuse 29 einen Aufnahmeabschnitt in Form einer umlaufenden Nut 97 auf, die in diesem Ausführungsbeispiel unterhalb des kugelschalenförmigen Vorsprungs 89 ausgebildet ist und um das erste Stützelement 87 umläuft.

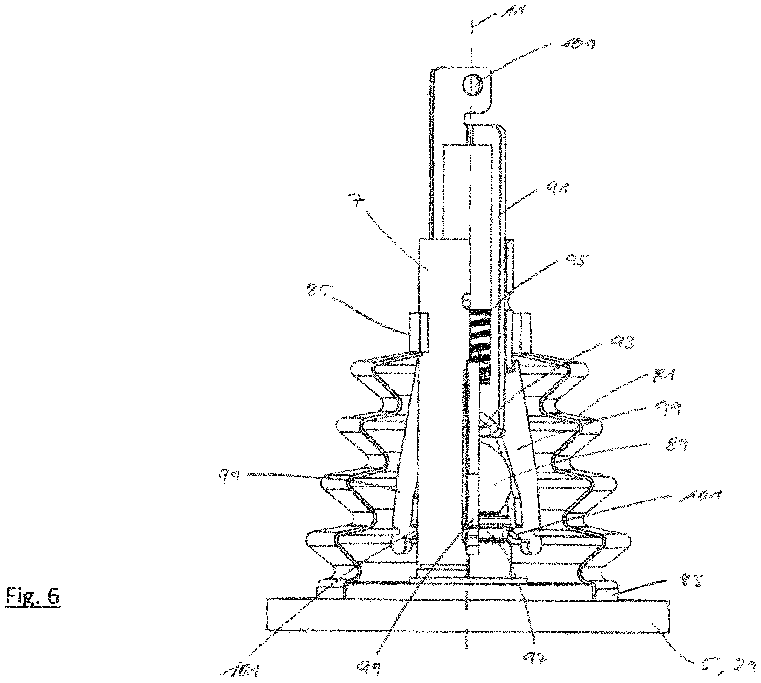

Des Weiteren ist in Figur 5 zu erkennen, dass an dem proximalen Ende des Bedienholms 7 Riegelelemente 99 vorgesehen sind, die relativ zu dem Bedienholm 7 zwischen einer in Figur 5 gezeigten Eingriffsstellung und einer in Figur 6 gezeigten Freigabestellung verschwenkt werden können, sodass sie sich quer zur Längsachse 11 des Bedienholms 7 bewegen können. Wenn sich die Riegelelemente 99 in der Eingriffsstellung befinden, greifen sie mit der umlaufenden Nut 97 ein (Figur 5), wenn der Bedienholm 7 in der in Figur 5 und 6 gezeigten axialen Stellung ist, in der Rastnasen 101 an den Riegelelementen 99 der umlaufenden Nut 97 gegenüber liegen.

Wenn die Riegelelemente 99 in der Eingriffsstellung sind und mit dem Aufnahmeabschnitt in Form der Nut 97 eingreifen, wie dies in Figur 5 gezeigt ist, erstreckt sich in dem hier beschriebenen ersten Ausführungsbeispiel die Längsachse 11 des Bedienholm 7 senkrecht zu der Reinigungsebene bzw. der Ebene, in der sich die zu reinigenden Bodenfläche 3 erstreckt. Außerdem ist dann, wenn die Riegelelemente 99 mit ihren Rastnasen 101 in die umlaufende Nut 97 eingreifen, der Bedienholm 7 gegenüber der Basis 5 derart verriegelt, dass er an einer Bewegung und insbesondere einer Schwenkbewegung relativ zu der Basis 5 gehindert ist. Wenn die Riegelelemente 99 jedoch der Freigabestellung sind, kann der Bedienholm 7 gegenüber der Basis 5 verschwenkt werden, wie das im Folgenden noch weiter beschrieben werden wird.

Wie bereits erwähnt worden ist, ist das zweite Stützelement 91 mit der daran vorgesehenen Aufnahmeaussparung 93 entlang der Längsachse 11 des Bedienholms 7 entgegen der Wirkung einer Feder 95 verschiebbar, wobei das zweite Stützelement 91 zwischen einer ersten weiter von dem Betätigungsende 13 entfernten und in Figur 5 gezeigten ersten Stellung und einer zweiten in Figur 6 gezeigten und dem Betätigungsende 13 näheren zweiten Stellung bewegt werden kann. Das zweite Stützelement 91 ist dabei derart ausgebildet und angeordnet, dass es bei der Bewegung aus der ersten Stellung (siehe Figur 5) in die zweite Stellung (siehe Figur 6) mit den Riegelelementen 99 derart eingreift, dass es sie in radialer Richtung zu der Längsachse 11 des Bedienholms 7 nach außen und damit quer zur Längsachse 11 aus der Eingriffsstellung in die Freigabestellung bewegt. Dazu greift das freie Ende des zweiten Stützelements 91 mit den Regelelemente 99 ein bzw. bewegt sich entlang dieser, sodass diese nach außen verschwenkt werden.

Um das zweite Stützelement 91 entgegen der Wirkung der Feder 95 von der ersten zu der zweiten Stellung zu bewegen, ist an dem Betätigungsende 13 des Bedienholms 7 benachbart zu einem Griffelement 103 ein Betätigungselement 105 in Form eines Hebels vorgesehen, der verschwenkt werden kann, wobei das Betätigungselement 105 über eine Betätigungsstange 107 mit dem Ende des zweiten Stützelements 91 verbunden ist, das dem Betätigungsende 13 des Bedienholms 7 am nächsten ist. Dazu greift ein Ende der Betätigungsstange 107 in eine Bohrung 109 an diesem Ende des zweiten Stützelements 91 ein. Die Schwenkbewegung des Betätigungselements 105 bewirkt dadurch, dass sich das zweite Stützelement 91 zwischen der ersten und der zweiten Stellung bewegt. Auf diese Weise sind die Riegelelemente 99 über das zweite Stützelement 91 mit dem Betätigungselement 105 gekoppelt, um eine Bewegung der Riegelelemente 99 zwischen der Eingriffsstellung und der Freigabestellung zu bewirken.

Schließlich ist der Balg 81 als Vorspannmittel ausgestaltet, beispielsweise indem er einen Stahldraht aufweist, das das erste und das zweite Ende 83, 85 voneinander weg vorspannt, sodass dann, wenn die Riegelelemente 99 mit den daran vorgesehenen Rastnasen 101 gegenüber der umlaufenden Nut 97 angeordnet sein, eine Kraft auf den Bedienholm 7 ausgeübt wird, der diesen Weg von der Basis 5 in eine Stellung drückt, in der die Rastnasen 101 entlang der Längsachse 11 des Bedienholms 7 gesehen beabstandet von der Nut 97 sind.

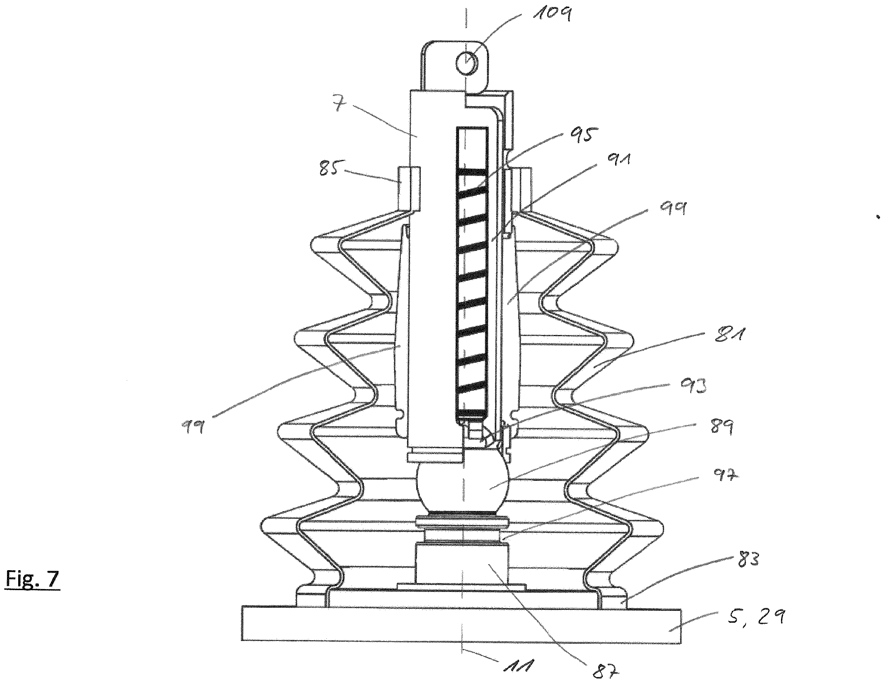

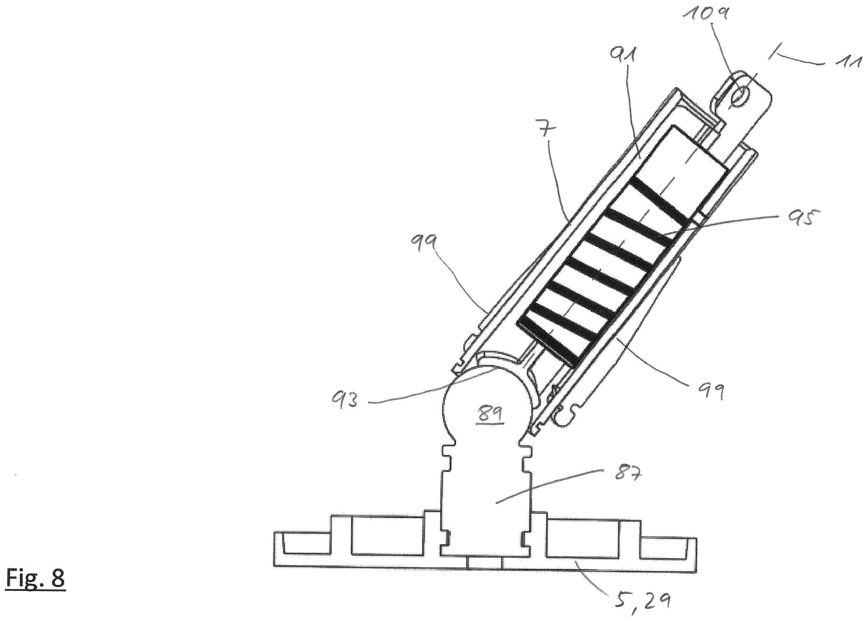

Zum Betreiben des zuvor beschriebenen ersten Ausführungsbeispiels einer Bodenreinigungsmaschine 1 muss bei dieser zunächst der Bedienholm 7 freigegeben werden, d. h. die Verriegelung des Gelenks 9 muss gelöst werden. Dazu zieht ein Benutzer das Betätigungselement 105 hin zu dem Griffelement 103 am Betätigungsende 13 des Bedienholms 7, sodass die Betätigungsstange 107 entlang der Längsachse 11 des Bedienholms 7 hin zu dem Betätigungsende 13 bewegt wird, wodurch wiederum das zweite Stützelement 91 aus der in Figur 5 gezeigten ersten Stellung in die in Figur 6 gezeigte zweite Stellung gegenüber dem Bedienholm 7 verschoben wird. Da das freie Ende des zweiten Stützelements 91 mit den Regelelemente 99 an den bedienten Räume 7 eingreift, werden die Riegelelemente 99 aus der in Figur 5 gezeigten Eingriffsstellung, in der Rastnasen 101 an den Regelelementen 99 mit der umlaufenden Nut 97 an dem ersten Stützelement 87 eingreifen, in die Freigabestellung verschwenkt, die in Figur 6 gezeigt ist und in der die Rastnasen 101 nicht mehr mit der Nut 97 in Eingriff sind. Dies wiederum bewirkt, dass die Vorspannkraft des Balgs 81 dazu führt, dass der Bedienholm 7 als Ganzes in vertikaler Richtung von der Basis 5 wegbewegt wird, wie dies in Figur 7 dargestellt ist. Aufgrund dieser Bewegung des Bedienholms 7 als Ganzem Weg von der Basis 5 kann sich das zweite Stützelement 91 aufgrund der Vorspannung der Feder 95 relativ zu dem Bedienholm 7 hin zu dem ersten Stützelement 87 in Richtung der ersten Stellung bewegen, wobei die Aufnahmeaussparung 93 zur Anlage mit dem Kugelschalen förmigen Vorsprung 89 kommt, sodass das freie Ende des zweiten Stützelements 91 an dem ersten Stützelement 87 anliegt und daran geführt ist. Aufgrund der Vorspannung durch den Balg 81 und die Feder 95 andererseits bewegt sich der Bedienholm 7 als Ganzes weg von der Basis 5, wobei aber die Vorspannung der Feder 95 bewirkt, dass, nachdem die Riegelelemente 99 freigegeben worden sind, das zweite Stützelement 91 sich wieder hin zu dem ersten Stützelement 87 bewegt und der Vorsprung 89 und die Aufnahmeaussparung 93 in Eingriff miteinander gelangen. Dabei wird der Bedienholm 7 durch diesen Eingriff zwischen Vorsprung 89 und Aufnahmeaussparung 93 bei einer Schwenkbewegung geführt, wie dies insbesondere in Figur 8 zu erkennen ist.

Nachdem der Bedienholm 7 in der zuvor beschriebenen Weise freigegeben worden ist, sodass er gegenüber der Basis 5 verschwenkt werden kann, wird im weiteren Betrieb des zuvor beschriebenen ersten Ausführungsbeispiels über die Leitung 35 Reinigungsflüssigkeit aus dem Reinigungsflüssigkeitsbehälter 17 auf die zu reinigenden Bodenfläche 3 aufgebracht, während gleichzeitig der Antriebsmotor 31 in Betrieb ist, sodass die Reinigungselemente 51, 61 zu einer exzentrischen Bewegung angetrieben werden, bei der die Eingriffselemente 63 mit der zu reinigenden Bodenfläche 3 eingreifen und diese zusammen mit der aufgebrachten Reinigungsflüssigkeit reinigen. Aufgrund der exzentrischen Bewegung der beiden Reinigungselemente 51, 61, die um 180° phasenverschoben ist, werden keine resultierenden Kräfte insbesondere um die Hochachse 15 auf die Basis 5 ausgeübt. Dadurch kann ein Benutzer die Bodenreinigungsmaschine 1 in einfacher Weise mittels des Bedienholms 7 führen. Da das Gelenk 9 in der bereits beschriebenen Weise ausgestaltet ist, kann der Benutzer zudem durch Verdrehen des Bedienholms 7 um dessen Längsachse 11 mittels des Griffelements 103 die Ausrichtung der Basis 5 leicht ändern. Wie bereits beschrieben, liegt dann, wenn das Gelenk 9 gelöst ist und der Bedienholm 7 frei gegenüber der Basis 5 verschwenkt werden kann, die Aufnahmeöffnung 93 an dem Vorsprung 89 an, sodass bei einer Schwenkbewegung des Bedienholms 7 gegenüber der Basis 5 der Bedienholm 7 an der Basis 5 geführt ist und eine Kraftübertragung nicht allein über den Balg 81 erfolgt. Dadurch können in axialer Richtung des Bedienholm 7 wirkenden Kräfte von dem Benutzer gut auf die Basis 5 übertragen werden. Darüber hinaus bewirkt die Führung aufgrund des Eingriffs des Vorsprung 89 mit der Aufnahmeöffnung 93, dass einer axialen Bewegung des Bedienholm 7 hin zu der Basis 5 ein Widerstand entgegengesetzt wird.

Da die Reinigungskörper 51, 61 und insbesondere der äußere Reinigungskörper 61 dreieckförmig ausgestaltet sind, kann die Bodenreinigungsmaschine 1 auch gut in verwinkelte Bereiche bewegt werden. Während des Betriebs wird zudem über den Saugfuß 21 aufgrund des von der Saugturbine 33 erzeugten Saugluftstroms Reinigungsflüssigkeit von der zu reinigenden Bodenfläche 3 wieder abgesaugt, wenn die Bodenreinigungsmaschine 1 über die Bodenfläche 3 bewegt wird. Diese mit Schmutz beladene Reinigungsflüssigkeit wird in dem Schmutzwassertank 19 aufgefangen.

Da die Anordnung aus dem Antriebsmotor 31 und den Reinigungselementen 51, 61 in axialer Richtung der Abtriebsachse 37 gesehen nur eine sehr kurze Baulänge aufweist, weist die Basis 5 der Bodenreinigungsmaschine eine nur sehr geringe Höhe auf, und die Bodenreinigungsmaschine 1 kann bei stark gegenüber der vertikalen verschwenktem Bedienholm 7 auch in Bereiche bewegt werden, in der der Raum in vertikaler Richtung stark begrenzt ist. Der Antrieb der Reinigungselemente 51, 61 ist also mit einer sehr geringen Baugröße verbunden, was die Einsatzmöglichkeiten der erfindungsgemäßen Bodenreinigungsmaschine 1 stark erweitert. Aufgrund der Art des Antriebs, mit dem eine exzentrische Bewegung der Reinigungselemente 51, 61 erzeugt wird, die vorzugsweise um 180° phasenverschoben sind, wird zudem erreicht, dass über die gesamte Fläche, in der die Reinigungselemente 51, 61 mit der zu reinigenden Bodenfläche 3 in Eingriff sind, eine gleichmäßige Reinigungswirkung erzielt wird und andererseits keine resultierenden Momente auf die Basis 5 der Bodenreinigungsmaschine 1 ausgeübt werden.

Wenn das erste Ausführungsbeispiels einer erfindungsgemäßen Bodenreinigungsmaschine nicht weiter betrieben oder der Betrieb unterbrochen werden soll, wird der Bedienholm 7 so verschwenkt, dass sich seine Längsachse 11 senkrecht zu der Reinigungsebene bzw. zu der zu reinigenden Bodenfläche 3 erstreckt, und anschließend wird der Bedienholm 7 entgegen der Vorspannung aufgrund der Stahlfeder in dem Balg 81 hin zu der Basis 5 gedrückt. Dabei werden die Riegelelemente 99 zunächst aufgrund des Eingriffs mit dem Vorsprung 89 auseinandergedrückt und greifen dann mit ihren Rastnasen 101 wieder in die Nut 97 ein, wodurch der Bedienholm 7 in der vertikalen Stellung verriegelt wird. Bei dieser Bewegung kann das zweite Stützelement 87 entgegen der Vorspannung durch die Feder 95 hin zu dem Betätigungsende 13 des Bedienholms 7 gedrückt werden. Dadurch wird dann wieder die in Figur 5 gezeigte Stellung des Gelenks 9 erreicht, in der das zweite Stützelement 91 dessen erste Stellung einnimmt.

Bei dem zuvor beschriebenen Ausführungsbeispiel weist die Bodenreinigungsmaschine 1 neben einer Batterieeinheit eine Saugturbine 33, einen Reinigungsflüssigkeitsbehälter 17 und einen Schmutzwassertank 19 auf. Es ist aber auch denkbar, dass die Bodenreinigungsmaschine 1 mit dem zuvor beschriebenen Aufbau des Antriebs für die Reinigungselemente 51, 61 zusammen mit einer weiteren Bodenreinigungsmaschine, die selbstfahrend ausgestaltet ist, verwendet wird und von dieser der Antriebsmotor 31 versorgt wird, Reinigungsflüssigkeit zugeführt wird und die an dieser vorhandene Saugeinrichtung zum Absaugen von Reinigungsflüssigkeit dazu verwendet wird, in dem Saugfuß einen Saugluftstrom herzustellen. Damit ist es nicht notwendig, dass eine Batterieeinheit, eine Saugturbine, ein Reinigungsflüssigkeitsbehälter und ein Schmutzwassertank vorgesehen sind.

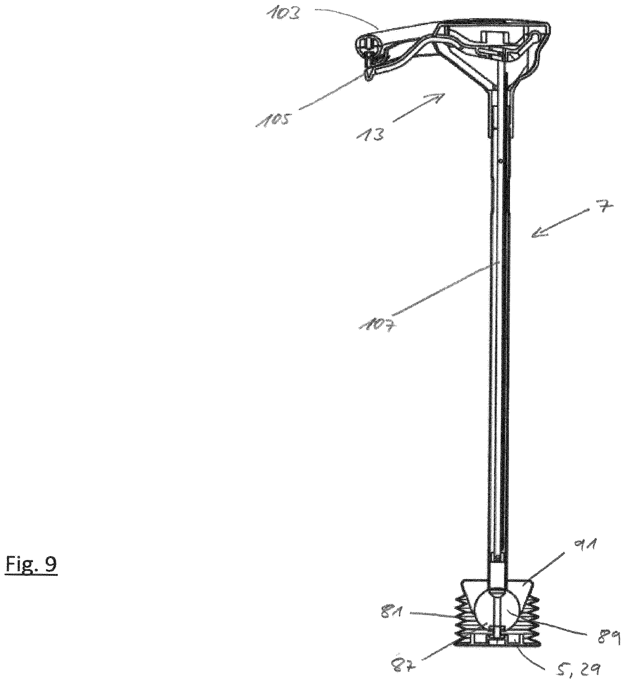

Nachfolgend wird unter Bezugnahme auf die Figuren 9 bis 11 ein zweites Ausführungsbeispiel einer erfindungsgemäßen Bodenreinigungsmaschine beschrieben, wobei sich die Bodenreinigungsmaschine gemäß dem zweiten Ausführungsbeispiel von der gemäß dem ersten Ausführungsbeispiels lediglich in Bezug auf den Aufbau des Gelenks 9 unterscheidet, während die übrigen Teile im Wesentlichen identisch ausgebildet sind, sodass in Bezug darauf auf die Beschreibung des ersten Ausführungsbeispiels verwiesen wird.

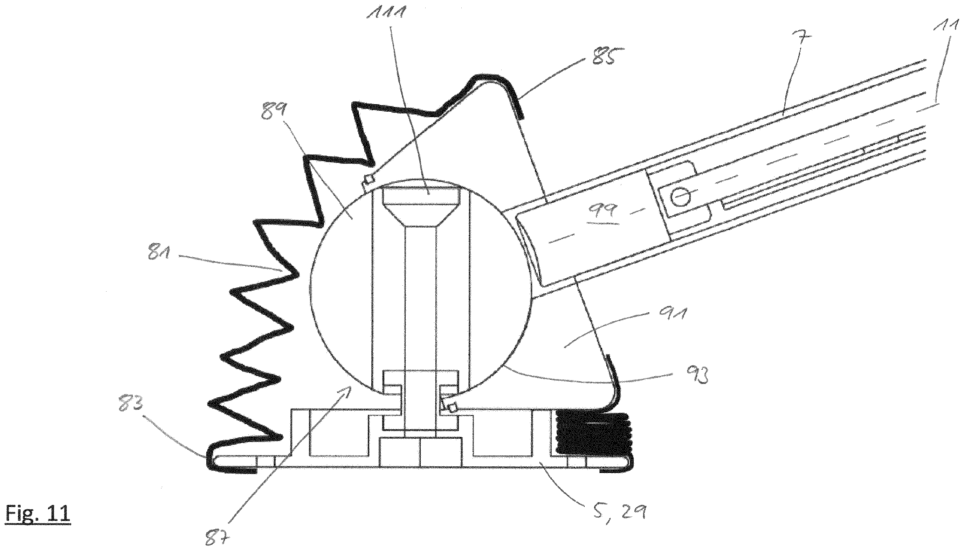

Bei der Bodenreinigungsmaschine gemäß dem zweiten Ausführungsbeispiel weist das Gelenk 9 ebenfalls einen Balg 81 auf, dessen erstes Ende 83 an der Basis 5 bzw. dem Gehäuse 29 befestigt ist, das den Antriebsmotor 31 umschließt. Außerdem weist der Balg 81 ein zweites Ende 85 auf, das im Bereich des proximalen Endes des Bedienholms 7 an diesem befestigt ist, wobei dieser sich auch hier entlang einer Längsachse 11 erstreckt (siehe insbesondere Figur 11).

Wie weiter insbesondere der Figur 9 zu entnehmen ist, ist auch bei dem zweiten Ausführungsbeispiel an dem Betätigungsende 13 des Bedienholms 7, der in Figur 9 nur teilweise und insbesondere ohne den Reinigungsflüssigkeitsbehälter 17 und den Schmutzwassertank 19 dargestellt ist, ein Griffelement 103 vorgesehen, benachbart zu dem ein Betätigungselement 105 vorgesehen ist, das auch hier als Hebel ausgebildet ist und mit einer Betätigungsstange 107 gekoppelt ist. Die Betätigungsstange 107 erstreckt sich entlang der Längsachse 11 des Bedienholms 7 von dem Betätigungsende 13 zu dem proximalen Ende.

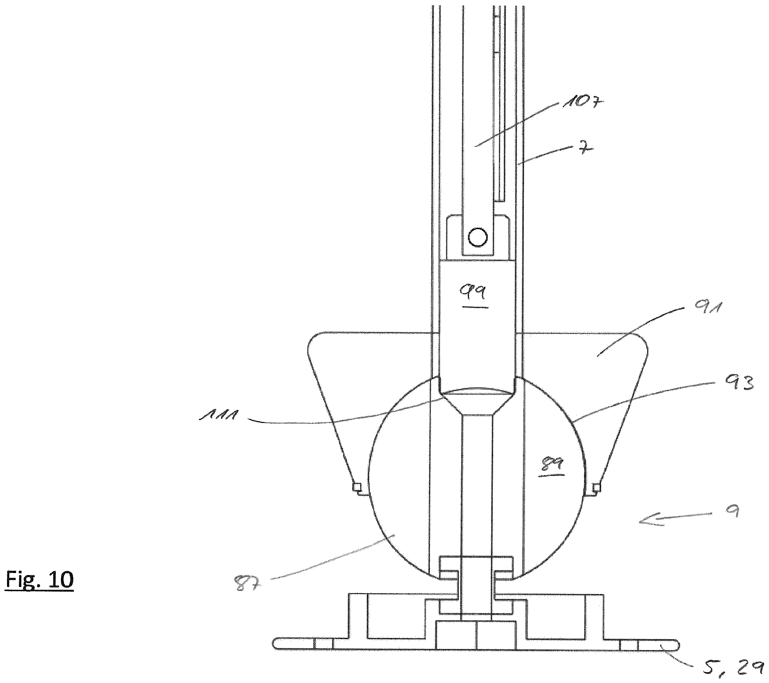

Wie weiter aus den Figuren 10 und 11 hervorgeht, ist an der Basis 5 bzw. dem Gehäuse 29 ein erstes Stützelement 87 vorgesehen, das auch in diesem Ausführungsbeispiel als ein konvex kugelschalenförmiger Vorsprung 89 ausgebildet ist. Dabei weist der Vorsprung 89 bei diesem Ausführungsbeispiel eine von der Basis 5 bzw. dem Gehäuse 29 wegweisende Aussparung 111 auf, die sich in dem hier gezeigten Ausführungsbeispiel im Wesentlichen senkrecht zu der Reinigungsebene bzw. der Ebene der zu reinigenden Bodenfläche 3 erstreckt, wenn die Bodenreinigungsmaschine mit den Reinigungselementen auf der Bodenfläche angeordnet ist.

Wie weiter den Figuren 10 und 11 zu entnehmen ist, ist an dem proximalen Ende des Bedienholms 7 ein zweites Stützelement 91 vorgesehen, dass eine von dem Bedienholm 7 wegweisende konkav kugelschalenförmig ausgebildete Aufnahmeaussparung 93 aufweist, die bemessen und ausgestaltet ist, den Vorsprung 89 des ersten Stützelements 87 aufzunehmen. Ferner ist die Aufnahmeaussparung 93 derart bemessen und erstreckt sich in einem solchen Umfang um den Vorsprung 89, dass das zweite Stützelement 91 nicht von dem Vorsprung 89 allein durch eine axiale Bewegung in Richtung der Längsachse 11 des Bedienholms 7 entfernt werden kann. Vielmehr verhindert ein Formschluss in dieser Richtung eine derartige Bewegung.

Wie schließlich weiter den Figuren 10 und 11 zu entnehmen ist, ist an dem proximalen Ende des Bedienholms 7 ein entlang der Längsachse 11 verschiebbares Riegelelement 99 vorgesehen, das mit der Betätigungsstange 107 verbunden ist, sodass eine Bewegung des Betätigungselements 105 zu einer axialen Bewegung des Riegelelements 99 entlang der Längsachse 11 des Bedienholms 7 führt.

Wenn das Riegelelement 99 in der in Figur 10 gezeigten Eingriffsstellung ist und mit der Aussparung 111 in dem Vorsprung 89 des ersten Stützelements 87 eingreift, ist der Bedienholm 7 gegenüber der Basis 5 verriegelt und kann insbesondere keine Schwenkbewegung relativ dazu ausführen, während dann, wenn das Riegelelement 99 die in Figur 11 gezeigte Freigabestellung einnimmt, eine solche Schwenkbewegung des Bedienholms 7 möglich ist.

Auch bei diesem zweiten Ausführungsbeispiel einer erfindungsgemäßen Bodenreinigungsmaschine sind das erste Stützelement 87 und das zweite Stützelement 91 an einander geführt. Ein Drehmoment insbesondere in Richtung der Längsachse 11 des Bedienholms 7 wird durch diese Führung jedoch nicht übertragen, sondern auch bei diesem Ausführungsbeispiel ist dazu der Balg 81 vorgesehen. Die Führung der beiden Stützelemente 87, 91 aneinander bewirkt jedoch, dass eine in axialer Richtung des Bedienholms 7 entlang der Längsachse 11 wirkende Kraft auf die Basis 5 übertragen werden kann. Außerdem ist der Balg 81 bei diesem Ausführungsbeispiel derart ausgestaltet, dass er ein Drehmoment auf den Bedienholm 7 ausübt, das diesen in Richtung einer Stellung treibt, bei der die Längsachse 11 des Bedienholms 7 im Wesentlichen senkrecht zu der Reinigungsebene bzw. der Ebene der zu reinigenden Bodenfläche 3 treibt, wenn die Maschine mit den Reinigungselementen auf der Bodenfläche angeordnet ist.

Bei diesem Ausführungsbeispiel kann bei der Inbetriebnahme der Bodenreinigungsmaschine zunächst durch Verschwenken des Betätigungselements 105 das Riegelelement 99 aus der Aussparung 111 gelöst werden, sodass anschließend der Bedienholm 7 frei gegenüber der Basis 5 verschwenkt werden kann, wie dies in dem schon beschriebenen Betrieb der Bodenreinigungsmaschine erforderlich ist. Wenn der Betrieb beendet oder unterbrochen werden soll, kann der Bedienholm 7 zurück in die vertikale Stellung verschwenkt werden, bei der es möglich ist, dass das Riegelelement 99 aus der Freigabestellung (siehe Figur 11) in die Aussparung 111 verschoben und damit in die Eingriffsstellung verbracht wird, um im Folgenden eine Schwenkbewegung des Bedienholms 7 relativ zu der Basis 5 zu verhindern.

Somit ist auch bei diesem Ausführungsbeispiel gegeben, dass der Bedienholm 7 bei einer Schwenkbewegung durch zwei aneinander anliegende Flächen geführt ist, was zum einen die Übertragung von axialen Kräften und zum anderen eine bessere Steuerbarkeit der Basis 5 ermöglicht.

### Bezugszeichenliste:

- 1: Bodenreinigungsmaschine
- 3: Bodenfläche
- 5: Basis
- 7: Bedienholm
- 9: Gelenk
- 11: Längsachse
- 13: Betätigungsende
- 15: Hochachse
- 17: Reinigungsflüssigkeitsbehälter
- 19: Schmutzwassertank
- 21: Saugfuß
- 23: Leitung
- 25: Leitung
- 27: Reinigungselementanordnung
- 29: Gehäuse
- 31: Antriebsmotor
- 33: Saugturbine
- 35: Leitung
- 37: Abtriebsachse
- 39: Abtriebswelle
- 39': Abtriebswellenabschnitt
- 41: erste Exzenterscheibe
- 43: zweite Exzenterscheibe
- 45: erstes Aufnahmeelement
- 47: erstes Lager
- 49: innerer Reinigungskörper
- 51: inneres Reinigungselement
- 53: Reinigungskörperebene
- 55: zweites Aufnahmeelement
- 57: zweites Lager
- 59: äußerer Reinigungskörper
- 61: äußeres Reinigungselement
- 63: Eingriffselement
- 65: Antriebsmotorhalteelement
- 66: elastisches Element
- 67: Schwenkachse
- 69: erste elastische Elemente
- 71: zweite elastische Elemente
- 73: Führungsrad
- 75: Räderachse (in dem Mail Anhang am rechten Bildrand abgeschnitten)
- 81: Balg
- 83: erstes Ende
- 85: zweites Ende
- 87: erstes Stützelement
- 89: Vorsprung
- 91: zweites Stützelement
- 93: Aufnahmeaussparung
- 95: Feder
- 97: Nut
- 99: Riegelelement
- 101: Rastnase
- 103: Griffelement
- 105: Betätigungselement
- 107: Betätigungsstange
- 109: Bohrung
- 111: Aussparung

## Patentansprüche

1. Bodenreinigungsmaschine (1) mit
einer Basis (5) und
einem Bedienholm (7)
wobei die Basis (5) eine Reinigungselementanordnung (27) mit wenigstens einem angetriebenen Reinigungselement (51, 61) aufweist, an dem Eingriffselemente (63) vorgesehen sind,
wobei das Reinigungselement (51, 61) ausgebildet ist, mit den daran vorgesehenen Eingriffselementen (63) mit einer zu reinigenden Bodenfläche (3) einzugreifen, sodass freie Enden der Eingriffselemente (63) beim Eingriff mit der Bodenfläche (3) in einer Reinigungsebene angeordnet sind,
wobei sich der Bedienholm (7) entlang einer Längsachse (11) zwischen einem proximalen Ende und einem Bestätigungsende (13) erstreckt und über ein Gelenk (9) derart schwenkbar an der Basis (5) angebracht ist, dass er in beliebige Richtungen gegenüber der Basis (5) verschwenkt werden kann,
wobei das Gelenk (9) derart ausgestaltet ist, dass bei einem Verdrehen des Bedienholms (7) um seine Längsachse (11) ein Drehmoment auf die Basis (5) ausgeübt wird, das so ausgerichtet ist, dass dadurch die Basis (5) um eine Hochachse (15) verschwenkt wird, die senkrecht zu der Reinigungsebene verläuft,
wobei das Gelenk (9)
einen hülsenförmigen Balg (81), der sich zwischen einem ersten und einem zweiten Ende (83, 85) erstreckt, dessen erstes Ende (83) mit der Basis (5) verbunden ist und dessen zweites Ende (85) mit dem Bedienholm (7) verbunden ist,
ein erstes Stützelement (87), das im Inneren des Balgs (81) angeordnet und an der Basis (5) davon wegweisend angebracht ist, und
ein zweites Stützelement (91), das im Inneren des Balgs (81) angeordnet und an dem proximalen Ende des Bedienholms (7) davon wegweisend angebracht ist, umfasst,
wobei das freie Ende von einem aus dem ersten und dem zweiten Stützelement (81, 91) einen konvex kugelschalenförmig ausgebildeten Vorsprung (89) aufweist und das freie Ende des anderen aus dem ersten und dem zweiten Stützelement (87, 91) eine konkav kugelschalenförmig ausgebildete Aufnahmeaussparung (93) aufweist, und
wobei die Aufnahmeaussparung (93) ausgebildet ist, den Vorsprung (89) aufzunehmen und für eine Schwenkbewegung zu führen.

2. Bodenreinigungsmaschine nach Anspruch 1, wobei das erste Stützelement (87) den konvex kugelschalenförmig ausgebildeten Vorsprung (89) aufweist und das zweite Stützelement (91) die konkav kugelschalenförmig ausgebildete Aufnahmeaussparung (93) aufweist.

3. Bodenreinigungsmaschine nach Anspruch 1 oder 2, wobei an dem Bedienholm (7) wenigstens ein Riegelelement (99) vorgesehen ist, das relativ zu dem Bedienholm (7) zwischen einer Eingriffsstellung und einer Freigabestellung beweglich ist,
wobei ein mit der Basis (5) verbundener Aufnahmeabschnitt (97) vorgesehen ist und
wobei das Riegelelement (99) und der Aufnahmeabschnitt (97, 111) derart ausgebildet sind, dass in der Eingriffsstellung das Riegelelement (99) mit dem Aufnahmeabschnitt (97, 111) derart eingreifen kann, dass der Bedienholm (7) gegenüber der Basis (5) verriegelt und an einer Bewegung relativ zu der Basis (5) gehindert ist, und dass in der Freigabestellung des Riegelelements (99) der Bedienholm (7) relativ zu der Basis(5) bewegbar ist.

4. Bodenreinigungsmaschine nach Anspruch 3, wobei, wenn das Riegelelement (99) mit dem Aufnahmeabschnitt (97) eingreift, die Längsachse (11) des Bedienholms (7) senkrecht zu der Reinigungsebene verläuft.

5. Bodenreinigungsmaschine nach Anspruch 3 und 4, wobei der Bedienholm (7) an dem Betätigungsende (13) ein Betätigungselement (105) aufweist, das mit dem wenigstens einen Riegelelement (99) derart gekoppelt ist, dass durch eine Bewegung des Betätigungselements (105) das Riegelelement (99) von der Eingriffsstellung in die Freigabestellung bewegt wird.

6. Bodenreinigungsmaschine nach einem oder mehreren der Ansprüche 3 bis 5, wobei das wenigstens eine Riegelelement (99) quer zur Längsachse (11) des Bedienholms (7) relativ zu diesem zwischen der Eingriffsstellung und der Freigabestellung beweglich ist.

7. Bodenreinigungsmaschine nach Anspruch 6, wobei das zweite Stützelement (91) in Richtung der Längsachse (11) zwischen einer ersten Stellung und einer zweiten Stellung verschiebbar an dem Bedienholm (7) angebracht ist und mit dem wenigstens einen Riegelelement (99) derart eingreift, dass das Riegelelement (99) bei einer Bewegung des zweiten Stützelements (91) aus der ersten Stellung in die zweite Stellung aus der Eingriffsstellung in die Freigabestellung bewegt wird.

8. Bodenreinigungsmaschine nach Anspruch 5 und 7, wobei das Betätigungselement (105) mit dem zweiten Stützelement (91) verbunden ist, sodass durch eine Bewegung des Betätigungselements (105) das zweite Stützelement (91) aus der ersten Stellung in die zweite Stellung bewegt werden kann.

9. Bodenreinigungsmaschine nach Anspruch 7 oder 8, wobei das zweite Stützelement (91) in der ersten Stellung weiter von dem Betätigungsende (13) des Bedienholms (7) entfernt ist als in der zweiten Stellung.

10. Bodenreinigungsmaschine nach Anspruch 9, wobei das zweite Stützelement (91) entlang der Längsachse (11) in einer Richtung weg von dem Betätigungsende (13) in die erste Stellung vorgespannt ist und
wobei erste Vorspannmittel vorgesehen sind, die das erste und das zweite Ende des Balgs voneinander weg vorspannen.

11. Bodenreinigungsmaschine nach einem oder mehreren der Ansprüche 1 bis 4, wobei der Vorsprung (89) in der Aufnahmeaussparung (93) derart aufgenommen ist, dass das zweite Stützelement (91) an einer Bewegung weg von dem ersten Stützelement (87), insbesondere in Richtung der Längsachse (11) des Bedienholms (7), gehindert ist.

12. Bodenreinigungsmaschine nach Anspruch 3 und Anspruch 11, wobei an dem Bedienholm (7) ein Riegelelement (99) vorgesehen ist, das entlang der Längsachse (11) des Bedienholms (7) zwischen einer Eingriffsstellung und einer Freigabestellung beweglich ist,
wobei der Aufnahmeabschnitt als eine von der Basis wegweisende Aussparung (111) in dem Vorsprung (89) vorgesehen ist, die ausgebildet ist, das Riegelelement (99) aufzunehmen, wenn dieses sich in der Eingriffsstellung befindet,
wobei das Riegelelement (99) in der Eingriffsstellung den Bedienholm (7) gegenüber der Basis (5) verriegelt und an einer Bewegung relativ zu der Basis (5) hindert.

13. Bodenreinigungsmaschine nach Anspruch 11 oder 12 sowie nach Anspruch 5, wobei das Betätigungselement (105) derart mit dem Riegelelement (99) gekoppelt ist, dass eine Betätigung des Betätigungselements (105) eine Bewegung des Riegelelements (99) entlang der Längsachse (11) hin zu dem Betätigungsende (3) bewirkt.

14. Bodenreinigungsmaschine nach einem oder mehreren der Ansprüche 11 bis 13, wobei zweite Vorspannmittel vorgesehen sind, die den Bedienholm (7) mit einer Kraft beaufschlagen, die den Bedienholm (7) in eine Stellung treibt, in der die Längsachse (11) senkrecht zu der Reinigungsebene verläuft.

## Claims

1. Floor-cleaning machine (1) having
a base (5) and
an operating bar (7),
wherein the base (5) has a cleaning-element arrangement (27) with at least one driven cleaning element (51, 61) on which engagement elements (63) are provided,
wherein the cleaning element (51, 61) is configured to engage, by way of the engagement elements (63) provided thereon, with a floor surface (3) to be cleaned, such that free ends of the engagement elements (63) are arranged in a cleaning plane when engaging with the floor surface (3),
wherein the operating bar (7) extends along a longitudinal axis (11) between a proximal end and an actuating end (13) and is pivotably attached to the base (5) via a joint (9) in such a way that it can be pivoted in any desired directions in relation to the base (5),
wherein the joint (9) is configured in such a way that, when the operating bar (7) is rotated about its longitudinal axis (11), a torque is exerted on the base (5), which torque is oriented in such a way that, as a result, the base (5) is pivoted about a vertical axis (15) which extends perpendicularly to the cleaning plane,
wherein the joint (9) comprises
a sleeve-shaped bellows (81), which extends between a first and a second end (83, 85), the first end (83) of which is connected to the base (5) and the second end (85) of which is connected to the operating bar (7),
a first supporting element (87), which is arranged in the interior of the bellows (81) and is attached to the base (5) so as to point away from the latter, and
a second supporting element (91), which is arranged in the interior of the bellows (81) and is attached to the proximal end of the operating bar (7) so as to point away from the latter,
wherein the free end of one of the first and second supporting elements (81, 91) has a convexly spherical-shell-shaped projection (89) and the free end of the other of the first and second supporting elements (87, 91) has a concavely spherical-shell-shaped receptacle recess (93), and
wherein the receptacle recess (93) is configured to receive the projection (89) and to guide it for a pivoting movement.

2. Floor-cleaning machine according to Claim 1, wherein the first supporting element (87) has the convexly spherical-shell-shaped projection (89), and the second supporting element (91) has the concavely spherical-shell-shaped receptacle recess (93).

3. Floor-cleaning machine according to Claim 1 or 2, wherein at least one locking element (99) is provided on the operating bar (7), which locking element is movable relative to the operating bar (7) between an engagement position and a release position,
wherein a receptacle section (97) connected to the base (5) is provided, and
wherein the locking element (99) and the receptacle section (97, 111) are configured in such a way that, in the engagement position, the locking element (99) can engage with the receptacle section (97, 111) in such a way that the operating bar (7) is locked in relation to the base (5) and is prevented from moving relative to the base (5), and that, in the release position of the locking element (99), the operating bar (7) is movable relative to the base (5).

4. Floor-cleaning machine according to Claim 3, wherein, when the locking element (99) engages with the receptacle section (97), the longitudinal axis (11) of the operating bar (7) extends perpendicularly to the cleaning plane.

5. Floor-cleaning machine according to Claims 3 and 4, wherein, at the actuating end (13), the operating bar (7) has an actuating element (105) which is coupled to the at least one locking element (99) in such a way that the locking element (99) is moved from the engagement position into the release position by way of a movement of the actuating element (105).

6. Floor-cleaning machine according to one or more of Claims 3 to 5, wherein the at least one locking element (99) is movable transversely to the longitudinal axis (11) of the operating bar (7) relative to the latter between the engagement position and the release position.

7. Floor-cleaning machine according to Claim 6, wherein the second supporting element (91) is attached to the operating bar (7) so as to be displaceable in the direction of the longitudinal axis (11) between a first position and a second position and engages with the at least one locking element (99) in such a way that the locking element (99) is moved out of the engagement position into the release position when the second supporting element (91) moves out of the first position into the second position.

8. Floor-cleaning machine according to Claims 5 and 7, wherein the actuating element (105) is connected to the second supporting element (91) such that the second supporting element (91) can be moved out of the first position into the second position by way of a movement of the actuating element (105).

9. Floor-cleaning machine according to Claim 7 or 8, wherein the second supporting element (91) is further away from the actuating end (13) of the operating bar (7) in the first position than in the second position.

10. Floor-cleaning machine according to Claim 9, wherein the second supporting element (91) is preloaded along the longitudinal axis (11) in a direction away from the actuating end (13) into the first position, and
wherein first preload means which preload the first and second ends of the bellows away from one another are provided.

11. Floor-cleaning machine according to one or more of Claims 1 to 4, wherein the projection (89) is received in the receptacle recess (93) in such a way that the second supporting element (91) is prevented from moving away from the first supporting element (87), in particular in the direction of the longitudinal axis (11) of the operating bar (7).

12. Floor-cleaning machine according to Claim 3 and Claim 11, wherein a locking element (99) is provided on the operating bar (7) and is movable along the longitudinal axis (11) of the operating bar (7) between an engagement position and a release position,
wherein the receptacle section is provided as a recess (111), facing away from the base, in the projection (89), which recess is configured to receive the locking element (99) when it is in the engagement position,
wherein, in the engagement position, the locking element (99) locks the operating bar (7) in relation to the base (5) and prevents it from moving relative to the base (5).

13. Floor-cleaning machine according to Claim 11 or Claim 12 and according to Claim 5, wherein the actuating element (105) is coupled to the locking element (99) in such a way that an actuation of the actuating element (105) brings about a movement of the locking element (99) along the longitudinal axis (11) towards the actuating end (3).

14. Floor-cleaning machine according to one of more of Claims 11 to 13, wherein second preloading means which subject the operating bar (7) to a force which drives the operating bar (7) into a position in which the longitudinal axis (11) extends perpendicularly to the cleaning plane are provided.

## Revendications

1. Machine de nettoyage du sol (1) comportant
une base (5) et
une barre de commande (7)
la base (5) présentant un ensemble d'éléments de nettoyage (27) comportant au moins un élément de nettoyage (51, 61) entraîné, sur lequel des éléments de contact (63) sont prévus,
l'élément de nettoyage (51, 61) étant réalisé pour venir en contact avec une surface du sol (3) à nettoyer à l'aide des éléments de contact (63) prévus sur celui-ci, de telle sorte que des extrémités libres des éléments de contact (63) soit disposées dans un plan de nettoyage lors du contact avec la surface du sol (3),
la barre de commande (7) s'étendant le long d'un axe longitudinal (11) entre une extrémité proximale et une extrémité d'actionnement (13) et étant montée de manière pivotante sur la base (5) par le biais d'une articulation (9), de telle sorte qu'elle puisse être pivotée dans des directions quelconques par rapport à la base (5),
l'articulation (9) étant configurée de telle sorte que, lors d'une rotation de la barre de commande (7) autour de son axe longitudinal (11), un couple est exercé sur la base (5), lequel est orienté de telle sorte que la base (5) soit ainsi pivotée autour d'un axe vertical (15) qui s'étend perpendiculairement au plan de nettoyage, l'articulation (9) comprenant
un soufflet (81) en forme de manchon, lequel soufflet s'étend entre une première et une deuxième extrémité (83, 85), dont la première extrémité (83) est reliée à la base (5) et dont la deuxième extrémité (85) est reliée à la barre de commande (7),
un premier élément de support (87) qui est disposé à l'intérieur du soufflet (81) et est monté sur la base (5) de manière opposée à celle-ci, et
un deuxième élément de support (91) qui est disposé à l'intérieur du soufflet (81) et est monté sur l'extrémité proximale de la barre de commande (7) de manière opposée à celle-ci,
l'extrémité libre d'un élément parmi le premier et le deuxième élément de support (81, 91) présentant une saillie (89) réalisée en forme de coque sphérique convexe et l'extrémité libre de l'autre élément parmi le premier et le deuxième élément de support (87, 91) présentant un évidement de réception (93) réalisé en forme de coque sphérique concave, et
l'évidement de réception (93) étant réalisé pour recevoir la saillie (89) et pour la guider pour un mouvement de pivotement.

2. Machine de nettoyage du sol selon la revendication 1, le premier élément de support (87) présentant la saillie (89) réalisée en forme de coque sphérique convexe et le deuxième élément de support (91) présentant l'évidement de réception (93) réalisé en forme de coque sphérique concave.

3. Machine de nettoyage du sol selon la revendication 1 ou 2, au moins un élément de verrouillage (99) étant prévu sur la barre de commande (7), lequel élément de verrouillage est mobile par rapport à la barre de commande (7) entre une position d'entrée en prise et une position de libération,
une partie de réception (97) reliée à la base (5) étant prévue et
l'élément de verrouillage (99) et la partie de réception (97, 111) étant réalisés de telle sorte que, dans la position d'entrée en prise, l'élément de verrouillage (99) peut venir en prise avec la partie de réception (97, 111) de telle sorte que la barre de commande (7) soit verrouillée par rapport à la base (5) et soit empêchée de se déplacer par rapport à la base (5), et que, dans la position de libération de l'élément de verrouillage (99), la barre de commande (7) soit déplaçable par rapport à la base (5).

4. Machine de nettoyage du sol selon la revendication 3, l'axe longitudinal (11) de la barre de commande (7) s'étendant perpendiculairement au plan de nettoyage lorsque l'élément de verrouillage (99) vient en prise avec la partie de réception (97).

5. Machine de nettoyage du sol selon les revendications 3 et 4, la barre de commande (7) présentant à l'extrémité d'actionnement (13) un élément d'actionnement (105) qui est accouplé à l'au moins un élément de verrouillage (99) de telle sorte que, par un déplacement de l'élément de d'actionnement (105), l'élément de verrouillage (99) est déplacé de la position d'entrée en prise à la position de libération.

6. Machine de nettoyage du sol selon l'une ou plusieurs des revendications 3 à 5, l'au moins un élément de verrouillage (99) étant mobile transversalement à l'axe longitudinal (11) de la barre de commande (7) par rapport à celle-ci entre la position d'entrée en prise et la position de libération.

7. Machine de nettoyage du sol selon la revendication 6, le deuxième élément de support (91) étant monté sur la barre de commande (7) de manière déplaçable en direction de l'axe longitudinal (11) entre une première position et une deuxième position et venant en prise avec l'au moins un élément de verrouillage (99) de telle sorte que l'élément de verrouillage (99) soit déplacé hors de la position d'entrée en prise dans la position de libération lors d'un déplacement du deuxième élément de support (91) de la première position à la deuxième position.

8. Machine de nettoyage du sol selon les revendications 5 et 7, l'élément d'actionnement (105) étant relié au deuxième élément de support (91) de telle sorte que, par un déplacement de l'élément d'actionnement (105), le deuxième élément de support (91) puisse être déplacé hors de la première position dans la deuxième position.

9. Machine de nettoyage du sol selon la revendication 7 ou 8, le deuxième élément de support (91) étant plus éloigné de l'extrémité d'actionnement (13) de la barre de commande (7) dans la première position que dans la deuxième position.

10. Machine de nettoyage du sol selon la revendication 9, le deuxième élément de support (91) étant précontraint dans la première position le long de l'axe longitudinal (11) dans une direction éloignée de l'extrémité d'actionnement (13) et
des premiers moyens de précontrainte étant prévus, lesquels précontraignent la première et la deuxième extrémité du soufflet à l'écart l'une de l'autre.

11. Machine de nettoyage du sol selon l'une ou plusieurs des revendications 1 à 4, la saillie (89) étant reçue dans l'évidement de réception (93) de telle sorte que le deuxième élément de support (91) soit empêché de se déplacer à l'écart du premier élément de support (87), en particulier en direction de l'axe longitudinal (11) de la barre de commande (7).

12. Machine de nettoyage du sol selon la revendication 3 et la revendication 11, un élément de verrouillage (99) étant prévu sur la barre de commande (7), lequel élément de verrouillage est mobile le long de l'axe longitudinal (11) de la barre de commande (7) entre une position d'entrée en prise et une position de libération,
la partie de réception étant prévue sous la forme d'un évidement (111), détourné de la base, dans la saillie (89), lequel évidement est réalisé pour recevoir l'élément de verrouillage (99) lorsque celui-ci se trouve dans la position d'entrée en prise,
l'élément de verrouillage (99), dans la position d'entrée en prise, verrouillant la barre de commande (7) par rapport à la base (5) et empêchant un déplacement par rapport à la base (5).

13. Machine de nettoyage du sol selon la revendication 11 ou 12 ainsi que selon la revendication 5, l'élément d'actionnement (105) étant accouplé à l'élément de verrouillage (99) de telle sorte qu'un actionnement de l'élément d'actionnement (105) provoque un déplacement de l'élément de verrouillage (99) le long de l'axe longitudinal (11) vers l'extrémité d'actionnement (3).

14. Machine de nettoyage du sol selon l'une ou plusieurs des revendications 11 à 13, des deuxièmes moyens de précontrainte étant prévus, lesquels soumettent la barre de commande (7) à une force qui entraîne la barre de commande (7) dans une position dans laquelle l'axe longitudinal (11) s'étend perpendiculairement au plan de nettoyage.
